(19) Europäisches Patentamt
European Patent Office
Office européen des brevets

(11) **EP 4 502 920 A1**

(12) **EUROPEAN PATENT APPLICATION**
published in accordance with Art. 153(4) EPC

(43) Date of publication:
**05.02.2025 Bulletin 2025/06**

(21) Application number: **23778073.9**

(22) Date of filing: **27.03.2023**

(51) International Patent Classification (IPC):
***G06T 5/00*** (2024.01)

(52) Cooperative Patent Classification (CPC):
**G06T 3/4007; G06T 3/4046; G06T 5/60; G06T 5/70;**
G06T 2207/10016; G06T 2207/20084

(86) International application number:
**PCT/CN2023/083986**

(87) International publication number:
**WO 2023/185706 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022 CN 202210343186**

(71) Applicant: **Boe Technology Group Co., Ltd.
Beijing 100015 (CN)**

(72) Inventors:
• **CHEN, Guannan
  Beijing 100176 (CN)**
• **LU, Yunhua
  Beijing 100176 (CN)**
• **ZHU, Dan
  Beijing 100176 (CN)**

(74) Representative: **Brötz, Helmut et al
Rieder & Partner mbB
Patentanwälte - Rechtsanwalt
Yale-Allee 26
42329 Wuppertal (DE)**

(54) **IMAGE PROCESSING METHOD, IMAGE PROCESSING APPARATUS AND STORAGE MEDIUM**

(57)     An image processing method, an image processing apparatus, and a non-transitory computer-readable storage medium. The image processing method comprises: acquiring an input image; and performing image enhancement processing on the input image to obtain an enhanced image. A resolution corresponding to the enhanced image is higher than a resolution corresponding to the input image.

| | |
|---|---|
| S10 | Acquiring an input multimedia |
| S11 | Performing image quality enhancement processing on the input multimedia to obtain an enhanced multimedia |
| S12 | Performing compensation processing on the enhanced multimedia to obtain a compensated multimedia |

Fig. 1B

**Description**

The present application claims priority to Chinese Patent Application No. 202210343186.5, filed on March 31, 2022, the entire contents of which are incorporated herein by reference as part of the present application.

TECHNICAL FIELD

Embodiments of the present disclosure relate to a multimedia processing method, a multimedia processing apparatus, and a non-transitory computer-readable storage medium.

BACKGROUND

With the development of social technology and the support of national policies, the ultra-high-definition display application has gradually appeared in people's lives. At present, the industrial chain of ultra-high-definition display is in constant improvement. In the industrial chain of ultra-high-definition display, for an acquisition side, there is ultra-high-definition camera, etc., for a display side, there are HDR (High Dynamic Range Imaging) televisions, large screen with 4K/8K resolution, and for a transmission side, there are 5G network, ultra-high-definition TV station, etc., and a large number of enterprises and public institutions are laying out in the industrial chain of ultra-high-definition display.

SUMMARY

At least one embodiment of the present disclosure provides a multimedia processing method, including: acquiring an input multimedia, and performing image quality enhancement processing on the input multimedia to obtain an enhanced multimedia. A resolution corresponding to the enhanced multimedia is higher than a resolution corresponding to the input multimedia.

For example, the multimedia processing method provided by at least one embodiment of the present disclosure further includes: performing compensation processing on the enhanced multimedia to obtain a compensated multimedia. A resolution corresponding to the compensated multimedia is higher than the resolution corresponding to the input multimedia.

For example, in the multimedia processing method provided by at least one embodiment of the present disclosure, the multimedia processing method is applied to a first display panel, the performing compensation processing on the enhanced multimedia to obtain a compensated multimedia, comprises: selecting a compensation parameter corresponding to the first display panel from a plurality of compensation parameters, and performing compensation processing on the enhanced multimedia based on the compensation parameter corresponding to the first display panel to obtain the compensated multimedia.

For example, in the multimedia processing method provided by at least one embodiment of the present disclosure, the selecting a compensation parameter corresponding to the first display panel from a plurality of compensation parameters, comprises: acquiring a compensation input parameter corresponding to the first display panel, the compensation input parameter comprising a panel parameter corresponding to the first display panel and/or an environmental parameter of an environment where the first display panel is located; and based on the compensation input parameter, selecting a compensation parameter corresponding to the compensation input parameter from the plurality of compensation parameters as the compensation parameter corresponding to the first display panel.

For example, in the multimedia processing method provided by at least one embodiment of the present disclosure, the acquiring a compensation input parameter corresponding to the first display panel, comprises: generating a first array, the first array corresponding to the first display panel, the first array comprising a plurality of first array elements, the panel parameter being represented by at least one first array element, and the environmental parameter being represented by at least one first array element; and determining the compensation input parameter corresponding to the first display panel based on the first array.

For example, in the multimedia processing method provided by at least one embodiment of the present disclosure, the panel parameter comprises a type of the first display panel, a size of the first display panel, and a display mode of the first display panel.

For example, in the multimedia processing method provided by at least one embodiment of the present disclosure, the type of the first display panel comprises an organic light-emitting display panel and a liquid crystal display panel, and the display mode of the first display panel comprises direct display and cast screen display.

For example, in the multimedia processing method provided by at least one embodiment of the present disclosure, the environmental parameter comprises an ambient light parameter, the ambient light parameter is determined based on a brightness value of ambient light of the environment where the first display panel is located.

For example, in the multimedia processing method provided by at least one embodiment of the present disclosure, the compensation processing comprises at least one of the following: brightness adjustment, contrast adjustment, and saturation adjustment.

For example, the multimedia processing method provided by at least one embodiment of the present disclosure further comprises: generating the plurality of compensation parameters. The generating the plurality of compensation parameters, comprises: acquiring a color card image obtained by photographing a standard color card; performing image quality enhancement processing on the color card image to obtain an enhanced color card image; performing compensation processing on the enhanced color card image based on an initial compensation parameter to obtain a compensated color card image; displaying the compensated color card image on a second display panel, and determining whether a display of the compensated color card image meets a preset requirement; in response to the display of the compensated color card image not meeting the preset requirement, adjusting the initial compensation parameter to obtain an adjusted compensation parameter, and performing compensation processing on the enhanced color card image again based on the adjusted compensation parameter until the display of the compensated color card image meets the preset requirement, and taking a compensation parameter corresponding to the compensated color card image meeting the preset requirement as one of the plurality of compensation parameters; determining a compensation input parameter corresponding to the second display panel, the compensation input parameter corresponding to the second display panel comprising a panel parameter corresponding to the second display panel and/or an environmental parameter of an environment where the second display panel is located; and establishing a mapping relationship between the compensation parameter corresponding to the compensated color card image meeting the preset requirement and the compensation input parameter corresponding to the second display panel.

For example, in the multimedia processing method provided by at least one embodiment of the present disclosure, the image quality enhancement processing comprises at least one of the following processing: frame interpolation processing, super-resolution processing, noise-reduction processing, color adjustment processing, high dynamic range up-conversion processing, and detail restoration processing.

For example, in the multimedia processing method provided by at least one embodiment of the present disclosure, performing image quality enhancement processing on the input multimedia to obtain the enhanced multimedia, comprises: acquiring an image quality enhancement parameter; and performing image quality enhancement processing on the input multimedia according to the image quality enhancement parameter to obtain the enhanced multimedia.

For example, in the multimedia processing method provided by at least one embodiment of the present disclosure, the image quality enhancement parameter comprises at least one of following parameters: a frame interpolation algorithm name and/or a frame interpolation parameter corresponding to the frame interpolation processing, a super-resolution algorithm name and/or a resolution parameter corresponding to the super-resolution processing, a color adjustment algorithm name and/or a color adjustment parameter corresponding to the color adjustment processing, a noise-reduction algorithm name and/or a noise-reduction parameter corresponding to the noise-reduction processing, a high dynamic range up-conversion algorithm name and/or a high dynamic range up-conversion parameter corresponding to the high dynamic range up-conversion processing, and a detail restoration algorithm name and/or a detail restoration parameter corresponding to the detail restoration processing.

For example, in the multimedia processing method provided by at least one embodiment of the present disclosure, the acquiring an image quality enhancement parameter, comprises: generating a second array, the second array comprising a plurality of second array elements, the frame interpolation parameter corresponding to the frame interpolation processing being represented by at least one second array element, the resolution parameter corresponding to the super-resolution processing being represented by at least one second array element, the color adjustment parameter corresponding to the color adjustment processing being represented by at least one second array element, the noise-reduction parameter corresponding to the noise-reduction processing being represented by at least one second array element, the high dynamic range up-conversion parameter corresponding to the high dynamic range up-conversion processing being represented by at least one second array element, and the detail restoration parameter corresponding to the detail restoration processing being represented by at least one second array element; and determining the image quality enhancement parameter based on the second array.

For example, in the multimedia processing method provided by at least one embodiment of the present disclosure, the acquiring an image quality enhancement parameter, comprises: acquiring an algorithm string, the algorithm string comprising at least one of following algorithms: a frame interpolation algorithm, a super-resolution algorithm, a color adjustment algorithm, a noise-reduction algorithm, a high dynamic range up-conversion algorithm, and a detail restoration algorithm, the frame interpolation algorithm comprising the frame interpolation algorithm name and the frame interpolation parameter, the super-resolution algorithm comprising the super-resolution algorithm name and the resolution parameter, the color adjustment algorithm comprising the color adjustment algorithm name and the color adjustment parameter, the noise-reduction algorithm comprising the noise-reduction algorithm name and the noise-reduction parameter, the high dynamic range up-conversion algorithm comprising the high dynamic range up-conversion algorithm name and the high dynamic range up-conversion parameter, and the detail restoration algorithm comprising the detail restoration algorithm name and the detail restoration parameter; and determining the image quality enhancement parameter based on the algorithm string.

For example, in the multimedia processing method provided by at least one embodiment of the present disclosure, a multimedia on which the frame interpolation processing is used to be performed comprises a video, the frame interpolation processing is implemented based on a first deep learning model, and the first deep learning model is configured to add at least one transition image frame between every two image frames in the video, the super-resolution processing is implemented based on a second deep learning model, and the second deep learning model is configured to perform super-resolution processing on a multimedia on which the super-resolution processing is used to be performed to improve a spatial resolution of the multimedia on which the super-resolution processing is used to be performed, the color adjustment processing is implemented based on a third deep learning model; and the noise-reduction processing is implemented based on a fourth deep learning model, and the fourth deep learning model is configured to perform noise-reduction processing on a multimedia on which the noise-reduction processing is used to be performed.

For example, in the multimedia processing method provided by at least one embodiment of the present disclosure, the third deep learning model comprises a regression sub-model and a plurality of lookup table sub-model groups, and each lookup table sub-model group comprises at least one lookup table sub-model; the color adjustment processing comprises: preprocessing the multimedia on which the color adjustment processing is used to be performed to obtain normalized data, the preprocessing comprising normalization processing; processing the normalized data by using the regression sub-model to obtain at least one weight parameter; acquiring a color adjustment parameter; selecting a lookup table sub-model group corresponding to the color adjustment parameter from the plurality of lookup table sub-model groups according to the color adjustment parameter; determining a target lookup table sub-model based on the at least one weight parameter and the lookup table sub-model group; and processing the normalized data by using the target lookup table sub-model to generate an output of the color adjustment processing.

For example, in the multimedia processing method provided by at least one embodiment of the present disclosure, the first deep learning model comprises a real-time intermediate flow estimation algorithm model.

For example, in the multimedia processing method provided by at least one embodiment of the present disclosure, the second deep learning model comprises a residual feature distillation network model.

For example, in the multimedia processing method provided by at least one embodiment of the present disclosure, the fourth deep learning model comprises an Unet network model.

For example, in the multimedia processing method provided by at least one embodiment of the present disclosure, the input multimedia comprises a video, and the enhanced multimedia comprises an enhanced video corresponding to the video, performing image quality enhancement processing on the input multimedia to obtain the enhanced multimedia, comprises: performing frame interpolation processing on the video to obtain a video after frame interpolation; performing color adjustment processing on the video after frame interpolation to obtain a color-adjusted video; performing noise-reduction processing on the color-adjusted video to obtain a noise-reduced video; performing super-resolution processing on the noise-reduced video to obtain the enhanced video. A resolution of the enhanced video is higher than a resolution of the noise-reduced video.

For example, in the multimedia processing method provided by at least one embodiment of the present disclosure, a color depth of the color-adjusted video is higher than a color depth corresponding to the video after frame interpolation, and/or a color gamut corresponding to the color-adjusted video is higher than a color gamut corresponding to the video after frame interpolation.

For example, in the multimedia processing method provided by at least one embodiment of the present disclosure, the acquiring an input multimedia, comprises: acquiring an original multimedia file; decoding the original multimedia file to obtain an original multimedia; performing format conversion processing on the original multimedia to obtain the input multimedia. A pixel format of the input multimedia comprises an RGB format.

For example, in the multimedia processing method provided by at least one embodiment of the present disclosure, a pixel format of the compensated multimedia is an RGB format, the multimedia processing method further comprises: performing format conversion on the compensated multimedia to obtain an output multimedia, a pixel format of the output multimedia being a YUV format; encoding the output multimedia to obtain an output multimedia file.

For example, in the multimedia processing method provided by at least one embodiment of the present disclosure, a color depth corresponding to the compensated multimedia is higher than a color depth corresponding to the input multimedia, and/or a color gamut corresponding to the compensated multimedia is higher than a color gamut corresponding to the input multimedia.

At least one embodiment of the present disclosure provides a multimedia processing apparatus, comprising: one or more memories, storing computer-executable instructions non-transitorily; and one or more processors, configured to run the computer-executable instructions. The computer-executable instructions, when executed by the one or more processors, implement the multimedia processing method according to any embodiment of the present disclosure.

For example, the multimedia processing apparatus provided by at least one embodiment of the present disclosure further comprises an input apparatus, in response to the multimedia processing method comprising acquiring a compensation input parameter corresponding to a first display panel and/or acquiring an image quality enhancement parameter, the compensation input parameter and/or the image quality enhancement parameter are/is input through the input apparatus.

For example, in the multimedia processing apparatus provided by at least one embodiment of the present disclosure, the input apparatus comprises a touch screen, a touch panel, a keyboard, a mouse, or a microphone.

At least one embodiment of the present disclosure provides a non-transitory computer-readable storage medium, the non-transitory computer-readable storage medium stores computer-executable instructions, when the computer-executable instructions are executed by a processor, the multimedia processing method according to any embodiment of the present disclosure is implemented.

At least one embodiment of the present disclosure provides a multimedia processing apparatus, which comprises: an acquisition module configured for acquiring an input multimedia; an image quality enhancement processing module configured for performing image quality enhancement processing on the input multimedia to obtain an enhanced multimedia; a resolution corresponding to the enhanced multimedia is higher than a resolution corresponding to the input multimedia.

For example, the multimedia processing apparatus provided by at least one embodiment of the present disclosure further comprises a compensation processing module configured for performing compensation processing on the enhanced multimedia to obtain a compensated multimedia. A resolution corresponding to the compensated multimedia is higher than the resolution corresponding to the input multimedia.

For example, the multimedia processing apparatus provided by at least one embodiment of the present disclosure further comprises a first display panel, and the compensation processing module comprises: a selection sub-module and a processing sub-module, the selection sub-module is configured for selecting a compensation parameter corresponding to the first display panel from a plurality of compensation parameters; and the processing sub-module is configured for performing compensation processing on the enhanced multimedia based on the compensation parameter corresponding to the first display panel to obtain the compensated multimedia.

For example, in the multimedia processing apparatus provided by at least one embodiment of the present disclosure, the selection sub-module comprises an acquisition unit and a selection unit, the acquisition unit is configured to acquire a compensation input parameter corresponding to the first display panel, the compensation input parameter comprising a panel parameter corresponding to the first display panel and/or an environmental parameter of an environment where the first display panel is located, and the selection unit is configured to: based on the compensation input parameter, select a compensation parameter corresponding to the compensation input parameter from the plurality of compensation parameters as the compensation parameter corresponding to the first display panel.

For example, in the multimedia processing apparatus provided by at least one embodiment of the present disclosure, the image quality enhancement processing comprises at least one of the following processing: frame interpolation processing, super-resolution processing, noise-reduction processing, and color adjustment processing. The image quality enhancement processing module includes at least one of the following sub-modules: a frame interpolation sub-module, a super-resolution sub-module, a color adjustment sub-module, and a noise-reduction sub-module. The frame interpolation sub-module comprises a first deep learning model and is configured for performing the frame interpolation processing on the input of the frame interpolation sub-module based on the first deep learning model, the input of the frame interpolation sub-module comprises a video, the frame interpolation processing comprises the processing of adding at least one transition image frame between every two image frames in the video; the super-resolution sub-module includes a second deep learning model, and is configured to perform super-resolution processing on the input of the super-resolution sub-module based on the second deep learning model to improve a spatial resolution of the input of the super-resolution sub-module; the color adjustment sub-module includes a third deep learning model and is configured for performing the color adjustment processing on the input of the color adjustment sub-module based on the third deep learning model; and the noise-reduction sub-module includes a fourth deep learning model, and is configured for performing the noise-reduction processing on the input of the noise-reduction sub-module based on the fourth deep learning model.

For example, the multimedia processing apparatus provided by at least one embodiment of the present disclosure further comprises: an encoding module, a pixel format of the compensated multimedia is an RGB format, and the encoding module is configured to: perform format conversion on the compensated multimedia to obtain an output multimedia, a pixel format of the output multimedia being a YUV format; and encode the output multimedia to obtain an output multimedia file.

BRIEF DESCRIPTION OF DRAWINGS

In order to more clearly illustrate the technical solutions of the embodiments of the present disclosure, the drawings of the embodiments will be briefly described in the following; it is obvious that the described drawings in the following are only related to some embodiments of the present disclosure and thus are not intended to limit the present disclosure.

Fig. 1A is a schematic flowchart of a multimedia processing method provided by at least one embodiment of the present disclosure;

Fig. 1B is a schematic flowchart of another multimedia processing method provided by at least one embodiment of the present disclosure;

Fig. 2 is an overall flowchart of a multimedia processing method provided by some embodiments of the present disclosure;

Fig. 3 is a schematic flowchart of a frame interpolation processing provided by some embodiments of the present disclosure;

Fig. 4 is a schematic flowchart of a super-resolution processing provided by some embodiments of the present disclosure;

Fig. 5 is a schematic flowchart of a color adjustment processing provided by some embodiments of the present disclosure;

Fig. 6 is a schematic flowchart of a noise-reduction processing provided by some embodiments of the present disclosure;

Fig. 7 is a schematic flowchart of a color adjustment processing and a noise-reduction processing provided by some embodiments of the present disclosure;

Fig. 8 is a schematic diagram of a multimedia processing apparatus provided by some embodiments of the present disclosure;

Fig. 9 is a schematic diagram of another multimedia processing apparatus provided by at least one embodiment of the present disclosure;

Fig. 10 is a schematic diagram of another multimedia processing apparatus provided by at least one embodiment of the present disclosure;

Fig. 11 is a schematic diagram of a non-transitory computer-readable storage medium provided by at least one embodiment of the present disclosure; and

Fig. 12 is a schematic diagram of a hardware environment provided by at least one embodiment of the present disclosure.

DETAILED DESCRIPTION

In order to make objects, technical solutions, and advantages of the embodiments of the present disclosure more apparent, the technical solutions of the embodiments of the present disclosure will be described in a clearly and fully understandable way in connection with the drawings related to the embodiments of the present disclosure. Apparently, the described embodiments are just a part but not all of the embodiments of the present disclosure. Based on the described embodiments of the present disclosure herein, those skilled in the art can obtain other embodiment(s), without any inventive work, which should be within the scope of the present disclosure.

Unless otherwise defined, all the technical and scientific terms used in the present disclosure have the same meanings as commonly understood by one of ordinary skill in the art to which the present disclosure belongs. The terms "first," "second," etc., which are used in the present disclosure, are not intended to indicate any sequence, amount, or importance, but distinguish various components. The terms "comprise," "comprising," "include," "including," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "On," "under," "right," "left" and the like are only used to indicate relative position relationship, and when the position of the object which is described is changed, the relative position relationship may be changed accordingly.

In order to make the following description of the embodiments of the present disclosure clear and concise, the present disclosure omits detailed description of known functions and known components.

The contradiction faced by the ultra-high-definition industry now is that the technology of ultra-high-definition device platform is developing rapidly, while the production of ultra-high-definition video content is lagging far behind. The stock of 4K/8K video sources is far from being able to meet the demand of ultra-high-definition playing, but a large number of stocks of standard-definition and high-definition videos cannot be played on ultra-high-definition device platforms. At present, it is the fastest and most direct way to solve the shortage of ultra-high-definition video sources by remastering the standard-definition video sources and high-definition video sources to obtain ultra-high-definition video sources. However, the ultra-high-definition remastering of low-definition film sources mostly relies on manual processing, so the production cycle of video sources is long and the labor cost is high.

At least one embodiment of the present disclosure provides a multimedia processing method, and the multimedia processing method includes: acquiring an input multimedia; and performing image quality enhancement processing on the input multimedia to obtain an enhanced multimedia. A resolution corresponding to the enhanced multimedia is higher than a resolution corresponding to the input multimedia.

In the multimedia processing method provided by the embodiments of the present disclosure, by performing image quality enhancement processing on the input multimedia, it is possible to automatically remake the input multimedia in ultra-high-definition, thereby generating an enhanced ultra-high-definition multimedia, so as to solve the problem of insufficient ultra-high-definition video sources and meet the development needs of the industry. The multimedia processing method can automatically generate ultra-high-definition video based on low-definition video source, reducing labor cost and shortening video source production cycle.

At least one embodiment of the present disclosure also provides a multimedia processing apparatus and a non-transitory computer-readable storage medium.

The multimedia processing method provided by the embodiment of the present disclosure can be applied to the multimedia processing apparatus provided by the embodiment of the present disclosure, and the multimedia processing apparatus may be configured on an electronic device. The electronic device may be a personal computer, a mobile terminal, and the like, and the mobile terminal may be a hardware device with various operating systems, such as a mobile phone, a tablet computer, and the like. That is to say, the execution subject of the multimedia processing method may be a personal computer, a mobile terminal, or the like.

Embodiments of the present disclosure will be described in detail below, but the present disclosure is not limited to these specific embodiments.

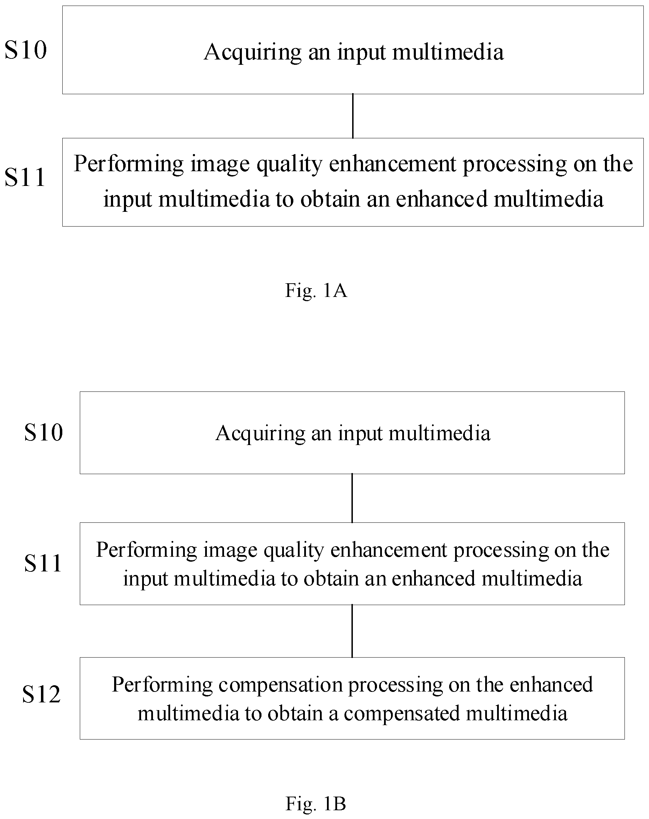

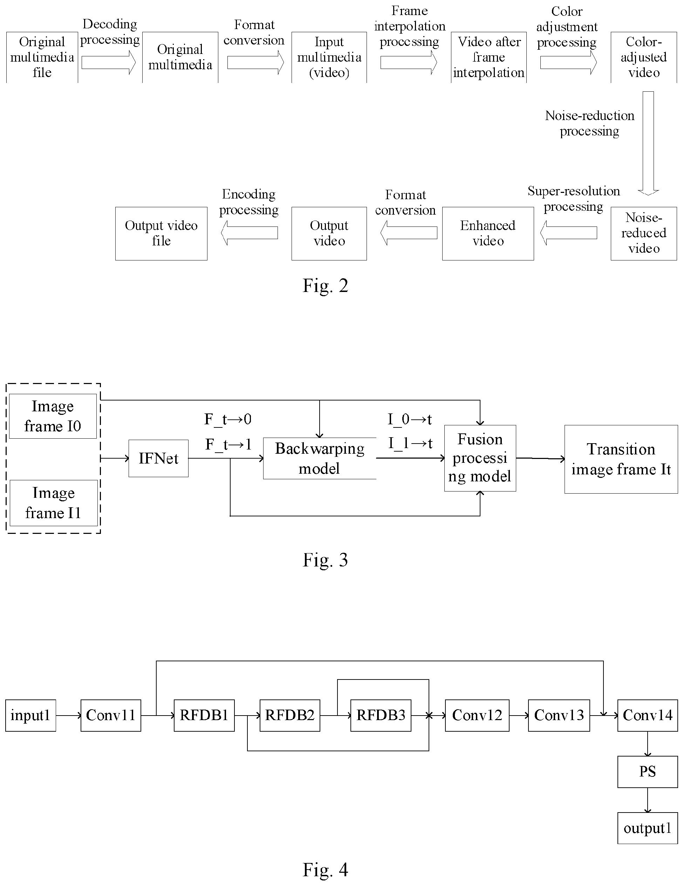

Fig. 1A is a schematic flowchart of a multimedia processing method provided by at least one embodiment of the present disclosure, Fig. 1B is a schematic flowchart of another multimedia processing method provided by at least one embodiment of the present disclosure, and Fig. 2 is an overall flowchart of a multimedia processing method provided by some embodiments of the present disclosure.

For example, the multimedia processing method may be applied to a first display panel, the first display panel may be an organic light emitting diode (OLED) display panel (for example, an active-matrix organic light emitting diode (AMOLED) display panel), a quantum dot light emitting diode (QLED) display panel, a liquid crystal display panel, and the like.

For example, the first display panel may have a resolution of 8K (7680 (pixels) *4320 (pixels)), that is, the first display panel may include a pixel array of 7680 (columns) *4320 (rows). It should be noted that the resolution of the first display panel can be set according to the actual situation. For example, the first display panel may have a resolution of 4K (4096 (pixels) *2160 (pixels)), and the embodiments of the present disclosure do not specifically limit the resolution of the first display panel.

For example, the first display panel may be a rectangular panel, a circular panel, an oval panel, or a polygonal panel, etc. In addition, the first display panel may be not only a flat panel, but also a curved panel or even a spherical panel.

For example, the first display panel may be applied to any product or component with a display function, such as a mobile phone, a tablet computer, a television (TV), a monitor, a notebook computer, a digital photo frame, a navigator, etc.

It should be noted that the first display panel may also include a projector.

As shown in Fig. 1A, in some embodiments, the multimedia processing method provided by the embodiments of the present disclosure includes steps S10 to S11. As shown in Fig. 1B, in other embodiments, the multimedia processing method provided by the embodiments of the present disclosure includes steps S10 to S12.

First, as shown in Fig. 1A and Fig. 1B, in step S10, acquiring an input multimedia.

For example, the input multimedia may include a video and/or a picture, etc. The videos may be videos of various types, and the pictures may be pictures of various types. Taking the video as an example, if an object in the video is a landscape, a person, etc., then the video is a landscape video, a person video, etc. The video may also be a surveillance video, an animal and plant video, etc. For example, for a picture, the shape of the picture may be various suitable shapes such as a rectangle, the picture may be a static picture or a dynamic picture, the shape, the size, and the like of the picture may be set by the user according to the actual situation, and the embodiments of the present disclosure are not specifically limited in this aspect. For a video, the resolution of the video may be set by the user according to the actual situation, and the embodiments of the present disclosure do not impose specific limitation. Embodiments of the present disclosure do not impose specific restrictions on the type, resolution, and other properties of the video/-picture.

For example, when the input multimedia is a video, the multimedia processing method provided by the present disclosure is a video processing method; when the input multimedia is a picture, the multimedia processing method provided by the present disclosure is an image processing method. It should be noted that, in the embodiments of the present disclosure, unless otherwise specified, taking an input multimedia being a video as an example for explanation.

For example, the input multimedia may be acquired by an image acquisition apparatus. The image acquisition apparatus may include a video camera, a camera, etc. The video camera may include a camera of a smart phone, a camera of a tablet computer, a camera of a personal computer, a lens of a digital camera, or even a webcam.

For example, the input multimedia may be a grayscale multimedia or a color multimedia.

For example, the input multimedia may be a multimedia directly captured by the image acquisition apparatus or a multimedia obtained after preprocessing the multimedia directly captured by the image acquisition apparatus. For example, in order to avoid the influence of the data quality, data imbalance, and the like of the multimedia directly acquired by the image acquisition apparatus on the subsequent multimedia processing process, before executing the step S10, the multimedia processing method provided by the embodiment of the present disclosure may further include the process of preprocessing the multimedia directly acquired by the image acquisition apparatus. The preprocessing can eliminate irrelevant information or noise information in the multimedia directly captured by the image acquisition apparatus, thus facilitating better processing of the input multimedia in the subsequent multimedia processing process. The preprocessing may include, for example, one or more of data augment processing, scaling processing, Gamma correction, etc., on the multimedia directly captured by the image acquisition apparatus. The data augment processing includes augmenting the multimedia data by random cropping, rotation, flipping, and skewing. The scaling processing includes scaling the multimedia directly collected by the image acquisition apparatus in equal proportion and cropping it to a preset size for facilitating subsequent processing operations.

For example, in some embodiments, the step S10 may include: obtaining an original multimedia file; decoding the original multimedia file to obtain an original multimedia; and performing format conversion processing on the original multimedia to obtain the input multimedia.

For example, as shown in Fig. 2, firstly, the original multimedia file is decoded to obtain the original multimedia, and then the format conversion processing is performed on the original multimedia to obtain the input multimedia. For example, in some embodiments, the pixel format of the original multimedia is a YUV format, the pixel format of the input multimedia is an RGB format, the color depth (color bit depth) of the input multimedia is 8 bits, the color gamut of the input multimedia is BT.709, the frame rate of the input multimedia may be 25fps (frames per second), and the resolution of the input multimedia may be 1920 (pixels) *1080(pixels). It should be noted that the color depth, color gamut, frame rate, and resolution of the input multimedia may be set according to the actual situation, and there are no specific restrictions here.

For example, types of a pixel format of a video stream may include YUV420 pixel format, YUV420 10-bit pixel format, YUV422 pixel format, YUV422P10 pixel format, RGB24 pixel format, BGR24 pixel format, etc. The pixel format of the multimedia in the present disclosure may be any of the above pixel formats, and the present disclosure does not limit the pixel format of the multimedia.

As shown in Fig. 1A and Fig. 1B, in the step S11, performing image quality enhancement processing on the input multimedia to obtain an enhanced multimedia. For example, the resolution corresponding to the enhanced multimedia is higher than the resolution corresponding to the input multimedia.

For example, the color depth corresponding to the enhanced multimedia is higher than the color depth corresponding to the input multimedia, and/or the color gamut corresponding to the enhanced multimedia is higher than the color gamut corresponding to the input multimedia.

For example, in some embodiments, the step S11 may include: acquiring an image quality enhancement parameter; and performing image quality enhancement processing on the input multimedia according to the image quality enhancement parameter to obtain the enhanced multimedia.

For example, the image quality enhancement processing includes at least one of the following processing: frame interpolation processing, super-resolution processing, noise-reduction processing, color adjustment processing, high dynamic range (HDR) up-conversion processing, detail restoration processing, and the like. For example, the color adjustment processing may be HDR color adjustment process.

For example, the image quality enhancement parameter includes at least one of the following parameters: a frame interpolation algorithm name and/or a frame interpolation parameter corresponding to the frame interpolation processing, a super-resolution algorithm name and/or a resolution parameter corresponding to the super-resolution processing, a color adjustment algorithm name and/or a color adjustment parameter corresponding to the color adjustment processing, a noise-reduction algorithm name and/or a noise-reduction parameter corresponding to the noise-reduction processing, a high dynamic range up-conversion algorithm name and/or a high dynamic range up-conversion parameter corresponding to the high dynamic range up-conversion processing, and a detail restoration algorithm name and/or a detail restoration parameter corresponding to the detail restoration processing.

For example, the image quality enhancement parameter may be set by the user through an input apparatus, so that the image quality enhancement parameter can be set according to the user's needs to meet the different needs of the user and meet the needs of different users.

For example, each processing in the image quality enhancement processing (such as the above-mentioned frame interpolation processing, super-resolution processing, noise-reduction processing, color adjustment processing, and the like) may be flexibly configured, and parameters can be set accordingly according to requirements. For example, one or more of the frame interpolation processing, super-resolution processing, noise-reduction processing, color adjustment processing, and the like may not be performed, or the frame interpolation processing, super-resolution processing, noise-reduction processing, and color adjustment processing may all be performed.

For example, in some embodiments, in the step S11, obtaining the image quality enhancement parameter may include: generating a second array, the second array comprising a plurality of second array elements, the frame interpolation parameter corresponding to the frame interpolation processing being represented by at least one second array element, the resolution parameter corresponding to the super-resolution processing being represented by at least one second array element, the color adjustment parameter corresponding to the color adjustment processing being represented by at least one second array element, and the noise-reduction parameter corresponding to the noise-reduction processing being represented by at least one second array element, the high dynamic range up-conversion parameter corresponding to the high dynamic range up-conversion processing being represented by at least one second array element, and the detail restoration parameter corresponding to the detail restoration processing being represented by at least one second array element; determining the image quality enhancement parameter based on the second array.

For example, the image quality enhancement parameter may be defined as an integer array format, that is, the second array is an integer array, the second array includes a plurality of second array elements, and each second array element corresponds to a meaning. According to the numerical value of each second array element, it can be determined whether the processing corresponding to the second array element needs to be executed. For example, taking the frame interpolation processing as an example, if a value of a second array element representing the frame interpolation parameter corresponding to the frame interpolation processing is a first value, it indicates that the frame interpolation processing is not performed; if the value of the second array element representing the frame interpolation parameter corresponding to the frame interpolation processing is a second value, it indicates that the frame interpolation processing is performed. For example, in some embodiments, the first value is 0 and the second value is 1, but the present disclosure is not limited thereto.

For example, in some embodiments, the second array element 0 (i.e., the first element in the second array) in the second array represents the frame interpolation parameter corresponding to the frame interpolation processing, the second array elements 1 and 2 (i.e., the second element and the third element in the second array) in the second array represent the resolution parameter corresponding to the super-resolution processing, the second array elements 3 and 4 (i.e., the fourth element and the fifth element in the second array) in the second array represent the color adjustment parameter corresponding to the color adjustment processing, and the second array element 5 (i.e., the sixth element in the second array) in the second array represents the noise-reduction parameter corresponding to the noise-reduction processing. The definition of each second array element in the second array corresponding to the image quality enhancement parameter is as follows: the second array element 0 indicates whether or not to enable the frame interpolation processing, when the second array element 0 is 0, it means that the frame interpolation processing is not enabled, and when the second array element 0 is 1, it means that the frame interpolation processing is enabled; the second array element 1 indicates whether or not to enable the super-resolution processing, when the second array element 1 is 0, it means that the super-resolution processing is not enabled, and when the second array element 1 is 1, it means that the super-resolution processing is enabled; the second array element 2 represents the super-resolution ratio, when the second array element 2 is 0, it means that the super-resolution ratio is 2 times (both length and width are increased by 2 times), when the second array element 2 is 1, it means that the super-resolution ratio is 4 times, etc., which is set according to the actual situation; the second array element 3 indicates whether or not to enable the color adjustment processing, when the second array element 3 is 0, it means that the color adjustment processing is not enabled, and when the second array element 3 is 1, it means that the color adjustment processing is enabled; the second array element 4 indicates a color adjustment style, when the second array element 4 is 0, it indicates that the color adjustment style is a default style, when the second array element 4 is 1, it indicates that the color adjustment style is a warm color style, when the second array element 4 is 2, it indicates that the color adjustment style is a cold color style, and so on, which is set according to the actual situation; the second array element 5 indicates whether or not to enable the noise-reduction processing, when the second array element 5 is 0, it means that the noise-reduction processing is not enabled, and when the second array element 5 is 1, it means that the noise-reduction processing is enabled. The number of the second array elements in the second array corresponding to the image quality enhancement parameter, the meaning represented by each second array element, etc., can be set according to the specific situation, and the present disclosure does not impose any restrictions on this.

It should be noted that the value of each second array element in the second array can be preset with a default value according to the actual situation.

For example, in some embodiments, in the step S11, acquiring the image quality enhancement parameter may include: acquiring an algorithm string; and determining the image quality enhancement parameter based on the algorithm string.

For example, the algorithm string may include at least one of the following algorithms: a frame interpolation algorithm, a super-resolution algorithm, a color adjustment algorithm, a noise-reduction algorithm, a high dynamic range up-conversion algorithm, and a detail restoration algorithm. The frame interpolation algorithm includes the frame interpolation algorithm name and the frame interpolation parameter, the super-resolution algorithm includes the super-resolution algorithm name and the resolution parameter, the color adjustment algorithm includes the color adjustment algorithm name and the color adjustment parameter, the noise-reduction algorithm includes the noise-reduction algorithm name and the noise-reduction parameter, the high dynamic range up-conversion algorithm includes the high dynamic range up-conversion algorithm name and the high dynamic range up-conversion parameter, and the detail restoration algorithm includes the detail restoration algorithm name and the detail restoration parameter.

For example, in some embodiments, the algorithm string is expressed as: ./sr_sdk -i test_video/1080_25. mp4 -m frc_1080: denoise_1080: sr1×_1080 -c 0 -p 0 -o out.mp4.

where sr_sdk represents an executable file; the characters test_video/1080_25. mp4 following -i represent the video to be tested (for example, the input multimedia in the present disclosure); the characters following -m represent the selected algorithms related to the image quality enhancement processing, and a plurality of algorithms may be combined and separated by ":", for example, in the above example, frc_1080: denoise_1080: sr1×_1080 represents three algorithms, frc_1080 represents the frame interpolation algorithm, frc indicates the frame interpolation algorithm name, 1080 indicates the parameter of the frame interpolation algorithm; denoise_1080 represents the noise-reduction algorithm, denoise represents the noise-reduction algorithm name, 1080 represents the parameter of the noise-reduction algorithm, and sr1 ×_1080 represents the super-resolution algorithm, sr represents the super-resolution algorithm name, and 1080 represents the parameter of the super-resolution algorithm; the character after -c indicates the video encoder, in the above example, the character after -c is 0, which indicates h264 coding. The character after -p represents the pixel format when encoding, in the above example, the character after -p is 0, which represents yuv420 pixel format. The characters following -o indicate a storage path and a file name of a video file obtained after processing the video to be tested, and formats such as .mp4 and .avi can be supported.

It should be noted that the parameter of each algorithm is related to the resolution of the video to be tested. For example, in the above example, the resolution of the video to be tested is 1080, so the parameter of each algorithm is also 1080.

For example, the called algorithm can include: 1) -m sr1×_1080/sr1×_540, which represents an algorithm for single-frame super-resolution processing; 2) -m sr3×_1080/sr3×_540, which represents EDVR (Video Restoration with Enhanced Deformable Convolutional Networks) algorithm; 3) -m sr_1080/sr_540, which represents RFDN (residual feature distillation network) algorithm; 4) -m denoise_1080/denoise_540, which represents the small model noise-reduction algorithm; 5) -m denoise 3 ×_1080/denoise 3×_540, which represents the large model noise-reduction algorithm; 6) -m detail_1080, which represents a detail enhancement algorithm (e.g., detail restoration processing); 7) -m hdr_lut_2160/ hdr_lut_1_080/ hdr_lut_540, which represents the small model HDR algorithm; 8) -m hdr_2160/ hdr_1080/ hdr_540, which represents the large model HDR algorithm; 9) -m frc_2160/ frc_1080/ frc_540, which represents the frame interpolation algorithm. It should be noted that the expression form of the algorithm can be set according to the actual situation, and the present disclosure is not specifically limited in this regard.

For example, when the character after -c is 1, it means h265 coding; when the character after -c is 2, it means mpeg-1 coding; when the character after -c is 3, it means mpeg-2 coding; when the character after -c is 4, it means mpeg-4 coding; when the character after -c is 5, it means wmv7 coding; when the character after -c is 6, it means wmv8 coding.

For example, when the character after -p is 1, it means yuv422 pixel format. It should be noted that by default, the character after -p is 0.

For example, in some embodiments, the multimedia on which the frame interpolation processing is used to be performed includes a video, the frame interpolation processing is implemented based on a first deep learning model, and the first deep learning model is configured to add at least one transition image frame between every two image frames in the video.

For example, the frame interpolation processing is used to add a new transition image frame between every two adjacent image frames of the video, so that the video can be played more smoothly. In some embodiments, the first deep learning model includes a real-time intermediate flow estimation algorithm (RIFE) model based on deep learning. The RIFE model based on deep learning generates the transition image frames with fewer artifacts, which makes the display effect of the video obtained by frame interpolation better. Moreover, the RIFE model runs fast and is suitable for increasing the frame rate of the video and enhancing the visual quality. The RIFE model can be trained end-to-end and achieve excellent performance.

It should be noted that in other embodiments, the first deep learning model may also adopt models such as a DAIN (Depth-Aware Video Frame Interpolation) model, a ToFLOW (Video Enhancement with Task-Oriented Flow) model, and the like. The embodiments of the present disclosure do not limit the specific type of the first deep learning model, as long as the first deep learning model can implement the frame interpolation processing.

Fig. 3 is a schematic flowchart of a frame interpolation processing provided by some embodiments of the present disclosure. The example shown in Fig. 3 is a flowchart of performing the frame interpolation processing based on the RIFE model.

For example, as shown in Fig. 3, for two adjacent image frames I0 and I1 in the video, the two image frames I0 and I1 and the target time t ($0 \leq t \leq 1$) are input into the IFNet model, and the IFNet model is used to directly estimate the intermediate optical flow, that is, the intermediate optical flow of the transition image frame between the image frames I0 and I1 relative to the image frames 10 and 11. The IFNet model can estimate the intermediate optical flow $F\_t \rightarrow 0$ directly and efficiently, and then obtain the intermediate optical flow $F\_t \rightarrow 1$ approximately by using the linear motion assumption, and the intermediate optical flow $F\_t \rightarrow 1$ is expressed as

follows:

$$F\_t \rightarrow 1 = -\frac{1-t}{t} F\_t \rightarrow 0$$

Then, the intermediate optical flows F_t→0 and F_t→1 and the image frames I0 and I1 are input into a backwarping model, the backwarping model is used to perform spatial deformation (warp) processing, based on the backward warping method, on the image frames I0 and I1 according to the estimated intermediate optical flows F_t→0 and F_t→1, so as to obtain two rough intermediate image frames I_0→t and I_1→t. In addition, in order to reduce the artifact problem of affine results, the intermediate optical flows F_t→0 and F_t→1, the image frames I0 and I1, and the intermediate image frames I_O→t and I_1→t are input to a fusion processing model for fusion processing, thereby generating a transition image frame It. The fusion processing model is implemented by an encoder-decoder architecture similar to FusionNet. In the fusion processing model, firstly, a fusion map and residual term are estimated based on the intermediate optical flows F_t→0 and F_t→1 and the image frames I0 and I1; and then, the intermediate image frames I_0→t and I_1→t are linearly combined according to the fusion map and then added with the residual term to obtain a reconstructed transition image frame It. The transition image frame It is represented as follows:

$$It=M \odot I\_0 \rightarrow t+(1-M) \odot I\_1 \rightarrow t + \Delta$$

where M is a fusion map obtained for fusing two intermediate image frames I_0→t and I_1→t, Δ is a residual term for refining image details, and ⊙ is an element-wise multiplication (Hadamard Product) symbol.

It should be noted that when the input multimedia is a picture, the image quality enhancement processing does not include the frame interpolation processing.

For example, in some embodiments, the super-resolution processing is implemented based on a second deep learning model, and the second deep learning model is configured to perform the super-resolution processing on the multimedia on which the super-resolution processing is used to be performed to improve the spatial resolution of the multimedia on which the super-resolution processing is used to be performed.

For example, the super-resolution processing can improve the spatial resolution (pixel data) of a multimedia without losing details. In some embodiments, the second deep learning model includes a residual feature distillation network (RFDN) model based on deep learning. The RFDN model has the advantages of a small number of parameters, fast speed, and high accuracy, but can achieve peak signal-to-noise ratio (PSNR) performance similar to that of other super-large models such as EDVR (Video Restoration with Enhanced Deformable Convective Networks).

It should be noted that in other embodiments, the second deep learning model can also adopt models such as the EDVR model. The embodiments of the present disclosure do not limit the specific type of the second deep learning model, as long as the second deep learning model can achieve the super-resolution processing.

Fig. 4 is a schematic flowchart of a super-resolution processing provided by some embodiments of the present disclosure. The example shown in Fig. 4 is a flowchart of performing super-resolution processing based on the RFDN model.

For example, as shown in Fig. 4, the RFDN model is configured to perform super-resolution processing on a multimedia input1 on which the super-resolution processing is used to be performed to obtain a multimedia output1 after super-resolution processing.

For example, the RFDN model may include a convolution layer Conv11, a plurality of residual feature distillation blocks (RFDB), a convolution layer Conv12, a convolution layer Conv13, a convolution layer Conv14, and a pixel shuffle layer PS, which are sequentially connected.

For example, in the example shown in Fig. 4, the plurality of residual feature distillation blocks include a first residual feature distillation block RFDB1, a second residual feature distillation block RFDB2, and a third residual feature distillation block RFDB3. It should be noted that the RFDN model is not limited to the specific structure shown in Fig. 4, and the RFDN model may include more or less residual feature distillation blocks, which is not specifically limited by the embodiments of the present disclosure.

For example, each residual feature distillation block RFDB includes a plurality of 1*1 convolution layers (1*1 convolution kernels), a plurality of SRB (shallow residual block) modules, and a 3*3 convolution layer (3*3 convolution kernel), and the number of 1*1 convolution layers is the same as that of the SRB modules, and are in one-to-one correspondence to the SRB modules. The 1*1 convolution layer is used for performing feature distillation, thus significantly reducing the number of parameters. The plurality of SRB modules are used for performing feature extraction, and each SRB module consists of a 3*3 convolution kernel, a residual concatenation, and an activation unit (ReLU). The SRB module can benefit from residual learning without introducing any additional parameters. The SRB module can achieve deeper residual connection, make better use of residual learning ability, and be light enough. The 3*3 convolution layer can refine features better.

For example, the features output by the plurality of residual feature distillation blocks RFDB are concatenated and processed by the convolution layer Conv12 to reduce the number of features. As shown in Fig. 4, the feature output by the first residual feature distillation block RFDB1, the feature output by the second residual feature distillation block RFDB2, and the feature output by the third residual feature distillation block RFDB3 are concatenated and then input to the convolution layer Conv12 for processing.

For example, in some embodiments, the convolution layer Conv11 can use a 3*3 convolution kernel for convolution processing, the convolution layer Conv12 can use a 1*1 convolution kernel for convolution processing, the convolution layer Conv13 can use a 3*3 convolution kernel for convolution processing, and the convolution layer Conv14 can use a 3*3 convolution kernel for convolution processing.

For example, the main function of the pixel shuffle layer PS is to obtain a high-resolution feature map from a low-resolution feature map through convolution and multi-channel shuffle, that is, the pixel shuffle layer PS is used to implement the operation of improving the spatial resolution.

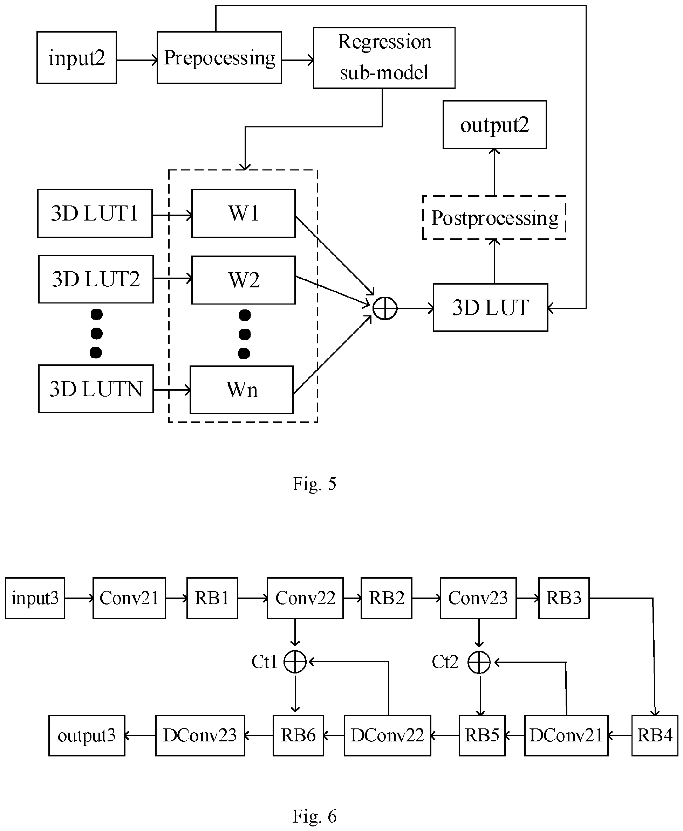

Fig. 5 is a schematic flowchart of a color adjustment processing provided by some embodiments of the present disclosure.

For example, in some embodiments, the color adjustment process is implemented based on a third deep learning model.

For example, the third deep learning model includes a regression sub-model and a plurality of lookup table sub-model groups, and each lookup table sub-model group includes at least one lookup table sub-model.

For example, the color adjustment processing includes: preprocessing the multimedia on which the color adjustment processing is used to be performed to obtain normalized data, the preprocessing including normalization processing; processing the normalized data by using the regression sub-model to obtain at least one weight parameter; acquiring a color adjustment parameter; selecting a lookup table sub-model group corresponding to the color adjustment parameter from the plurality of lookup table sub-model groups according to the color adjustment parameter; determining a target lookup table sub-model based on the at least one weight parameter and the lookup table sub-model group; and processing the normalized data by using the target lookup table sub-model to generate an output of the color adjustment processing.

For example, the plurality of lookup table sub-model groups may be obtained by training based on the color adjustment style of a colorist who has accumulated color adjustment experience. The plurality of lookup table sub-model groups respectively correspond to a plurality of different color styles, so as to meet the requirements of different color adjustment styles. Based on the color adjustment parameter, the color adjustment style can be determined, so that the lookup table sub-model group corresponding to the color adjustment style corresponding to the color adjustment parameter can be selected from the plurality of lookup table sub-model groups. The color adjustment parameter can be set by the user according to the actual needs, and input into the device or apparatus for executing the multimedia processing method.

For example, as shown in Fig. 5, the third deep learning model is configured to perform color adjustment processing on a multimedia input2 on which the color adjustment processing is used to be performed, so as to obtain a multimedia output2 after color adjustment processing. For example, the multimedia input2 on which the color adjustment is used to be performed can be a standard dynamic range (SDR) multimedia.

For example, as shown in Fig. 5, firstly, preprocessing the multimedia input2 to obtain normalized data. The preprocessing includes normalization processing, that is, the pixel values of all pixels of the multimedia input2 are normalized to facilitate the subsequent model processing. Then, the normalized data are processed by the regression sub-model to obtain at least one weight parameter (W1, W2, ..., Wn, n is a positive integer). Then, based on the color adjustment parameter input by the user, a lookup table sub-model group corresponding to the color adjustment parameter input by the user can be selected from the plurality of lookup table sub-model groups. Then, based on at least one weight parameter and the lookup table sub-model group, the target lookup table sub-model is determined. For example, the at least one weight parameter is in one-to-one correspondence to at least one lookup table sub-model in the lookup table sub-model group. As shown in Fig. 5, the lookup table sub-model group may include a lookup table sub-model 3D LUT1, a lookup table sub-model 3D LUT2, ... and a lookup table sub-model 3D LUTN. Then, each lookup table sub-model is multiplied by the corresponding weight parameter to obtain the multiplication result, and then the multiplication results corresponding to all lookup table sub-models are added to obtain the target lookup table sub-model 3D LUT. For example, the 3D LUT is expressed as: 3D LUT = 3D LUT1 * W1+3D LUT2 * W2+...+3D LUTN * Wn. Finally, the normalized data is processed by using the target lookup table sub-model to generate the output output2 of the color adjustment processing.

It should be noted that if the pixel format of the multimedia input2 is not RGB format, for example, the pixel format of the multimedia input2 is YUV format, the preprocessing may also include format conversion processing, which indicates converting the multimedia input2 into the nonlinear RGB data with reference to the nonlinear conversion function of HLG(Hybrid Log Gamma) system in the standard GY/T 351-2018, and then normalizing the nonlinear RGB data to obtain the normalized data. In this case, the normalized data is processed by the target lookup table sub-model to obtain the output of the target lookup table sub-model, the output of the target lookup table sub-model is nonlinear RGB data. Finally, the output of the target lookup table sub-model needs to be postprocessed to generate the output output2 of the color adjustment processing, the postprocessing may include format conversion processing, that is, the output of the target lookup table sub-model is transformed based on the provisions of GY/T 351-2018, so as to obtain the output output2 of the color adjustment processing. For example, the pixel format of the output output2 of the color adjustment processing can be YUV format. For example, the output output2 of the color adjustment processing may also be processed to obtain a multimedia with a color depth of 10bits and a color gamut of BT.2020, and the pixel format of this multimedia is also YUV format.

Fig. 6 is a schematic flowchart of a noise-reduction processing provided by some embodiments of the present disclosure. The example shown in Fig. 6 is a flowchart of performing noise-reduction processing based on an Unet network model.

For example, in some embodiments, the noise-reduction processing is implemented based on a fourth deep learning model, and the fourth deep learning model is configured to perform noise-reduction processing on a multimedia on which the noise-reduction processing is used to be performed.

For example, as shown in Fig. 6, the fourth deep learning model includes the Unet network model and is used to suppress the noise of the whole multimedia, that is, to denoise the noise of the whole multimedia. For example, the fourth deep learning model is configured to perform noise-reduction processing on a multimedia input3 on which the noise-reduction processing is used to be performed to obtain a multimedia output3 after noise-reduction processing.

For example, as shown in Fig. 6, the fourth deep learning model may include a plurality of convolution layers, a plurality of residual blocks, a plurality of deconvolution layers, and a plurality of connection layers. The plurality of convolution layers include a convolution layer Conv21, a convolution layer Conv22, and a convolution layer Conv23, the plurality of deconvolution layers include a deconvolution layer Dconv21, a deconvolution layer Dconv22, and a deconvolution layer Dconv23, the plurality of residual blocks include a residual block RB1, a residual block RB2, a residual block RB3, a residual block RB4, a residual block RB5, and a residual block RB6, and the plurality of connection layers include a connection layer Ct1 and a connection layer Ct2. As shown in Fig. 6, the fourth deep learning model includes the convolution layer Conv21, the residual block RB1, the convolution layer Conv22, the residual block RB2, the convolution layer Conv23, the residual block RB3, the residual block RB4, the deconvolution layer Dconv21, the residual block RB5, the deconvolution layer Dconv22, the residual block RB6, and the deconvolution layer Dconv23, which are sequentially connected. The connection layer Ct1 is used for mapping and concatenating the output of the convolution layer Conv22 and the output of the deconvolution layer Dconv22, and outputting the result of mapping and concatenating to the residual block RB6, and the connection layer Ct2 is used for mapping and concatenating the output of the convolution layer Conv23 and the output of the deconvolution layer Dconv21, and outputting the result of mapping and concatenating to the residual block RB5.

For example, each convolution layer can perform convolution operation, that is, extracting features, and the convolution stride of each convolution layer may be 2, so as to perform downsampling. Each deconvolution layer is used to perform deconvolution operation, and the deconvolution stride of each deconvolution layer may also be 2, so as to perform upsampling. The forward propagation process of the convolution layer corresponds to the backward propagation process of the deconvolution layer, and the backward propagation process of the convolution layer corresponds to the forward propagation process of the deconvolution layer. The deconvolution operation indicates perform deconvolution processing on the feature map obtained by each layer to obtain a visual image, that is, the deconvolution operation can transform the feature information of the image from the feature map space to the pixel space. The deconvolution operation can perform deconvolution processing on the feature map output by the convolution layer to obtain the deconvolution result. The deconvolution result can show the feature information extracted by the convolution layer.

For example, the output of the convolution layer and the output of the deconvolution layer with the same scale are concatenated through the connection layer, that is, shallow features and deep features are concatenated for compensation, thus reducing the loss of spatial information caused by compression and downsampling. Here, what is referred to as concatenation can be, for example, a merge concatenation operation, that is, the features with the same size respectively in the convolution layer and the deconvolution layer are mapped and concatenated by means of memory mapping (the vectors corresponding to the features are merged and the number of channels in the layer where the features are located is doubled).

For example, the output of each convolution layer/deconvolution layer is transmitted to a residual block, which can ensure the circulation of feature information with different scales between various layers.

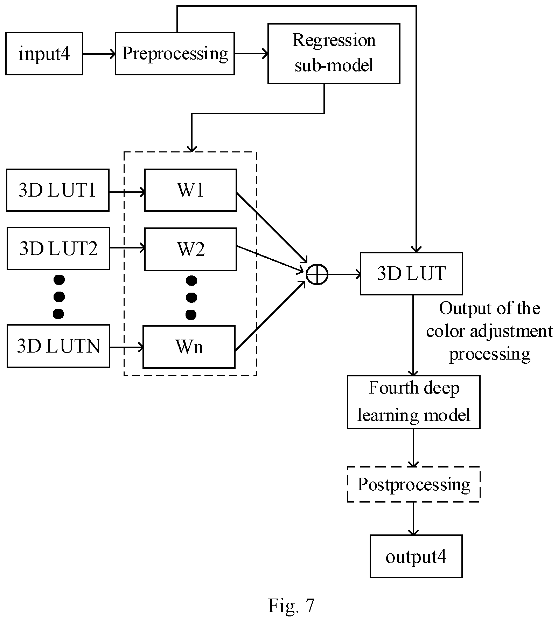

Fig. 7 is a schematic flowchart of a color adjustment processing and a noise-reduction processing provided by some embodiments of the present disclosure.

For example, as shown in Fig. 7, firstly, a multimedia input4 is preprocessed to obtain normalized data. The preprocessing includes normalization processing, that is, the pixel values of all pixels in the multimedia input4 are normalized to facilitate the subsequent model processing. Then, the regression sub-model is used to process the normalized data to obtain at least one weight parameter (W1, W2, ..., Wn, n is a positive integer). Then, based on the color adjustment parameter input by the user, a lookup table sub-model group 3D LUT1 to 3D LUTN corresponding to the color adjustment parameter input by the user can be selected from the plurality of lookup table sub-model groups. Then, based on at least one weight parameter W1 to Wn and the lookup table sub-model group 3D LUT1 to 3D LUTN, the target lookup table sub-model 3D LUT is determined. Then, the normalized data is processed by using the target lookup table sub-model 3D LUT to generate the output of the color adjustment processing. Then, the fourth deep learning model shown in Fig. 6 is used to perform noise-reduction processing on the output of the color adjustment processing to obtain the output output4 of the noise-reduction processing. Similarly, if the pixel format of the multimedia input2 is not RGB format, the preprocessing may also include format conversion processing. In this case, after obtaining the output of the color adjustment processing, the fourth deep learning model shown in Fig. 6 is used to perform noise-reduction processing on the output of the color adjustment processing to obtain the output of the fourth deep learning model, and then the output of the fourth deep learning model is postprocessed to obtain the output output4 of the noise-reduction processing, and the postprocessing may include format conversion processing, that is, the format of the output of the fourth deep learning model is converted to obtain the output output4 of the noise-reduction processing.

For example, in some embodiments, image quality enhancement processing is used to sequentially perform frame interpolation processing, color adjustment processing, noise-reduction processing, super-resolution processing, etc., on the input multimedia, so that the resolution of the enhanced multimedia reaches 4K or 8K or the like, the frame rate of the enhanced multimedia reaches 50-60 fps, the color depth (color bit depth) of the enhanced multimedia reaches 10-12 bits, and the color gamut of the enhanced multimedia is BT.2020, and the image quality enhancement processing makes the enhanced multimedia have a certain color style.

For example, in some embodiments, the input multimedia includes a video, and the enhanced multimedia includes an enhanced video corresponding to the video. As shown in Fig. 2, in some embodiments, step S11 may include: performing frame interpolation processing on the video (input multimedia) to obtain a video after frame interpolation; performing color adjustment processing on the video after frame interpolation to obtain a color-adjusted video; performing noise-reduction processing on the color-adjusted video to obtain a noise-reduced video; and performing super-resolution processing on the noise-reduced video to obtain the enhanced video.

For example, the frame interpolation processing can be performed on the video based on the frame interpolation parameter corresponding to the frame interpolation processing and input by the user to obtain the video after frame interpolation; the color adjustment processing can be performed on the video after frame interpolation based on the color adjustment parameter corresponding to the color adjustment processing and input by the user to obtain the color-adjusted video; the noise-reduction processing can be performed on the color-adjusted video based on the noise-reduction parameter corresponding to the noise-reduction processing and input by the user to obtain the noise-reduced video; and the super-resolution processing can be performed on the noise-reduced video based on the resolution parameter corresponding to the super-resolution processing and input by the user to obtain the enhanced video.

For example, the resolution of the enhanced video is higher than that of the noise-reduced video.

For example, the color depth of the color-adjusted video is higher than that of the video after frame interpolation, and/or the color gamut of the color-adjusted video is higher than that of the video after frame interpolation.

For example, the resolution of the enhanced video can be 4K or 8K, the frame rate of the enhanced video can reach 50~60fps, the color depth of the enhanced video can reach 10~12 bits, and the color gamut of the enhanced video can be BT.2020.

It should be noted that in the embodiments of the present disclosure, the deep learning models (the above-mentioned first to fourth deep learning models) are all implemented under the tensorRT framework. For example, the deep learning model needs to be initialized before performing related processing. Initialization is to set and import all the deep learning models, parameters, drivers, and other environments when the program is started, so as to prepare for the program running, thus avoiding the slow processing speed caused by repeatedly calling relevant configuration modules during the program running, thus increasing the processing speed.

For example, the enhanced multimedia may be obtained after the image quality enhancement processing is performed on the input multimedia, and the enhanced multimedia can be sent to, for example, a first display panel for display. However, the material and display characteristics of the first display panel are various, and the ambient light of the environment where the first display panel is located is also different, which can lead to the display effect of the first display panel not reaching the expected state. In order to compensate the influence of different display panels and ambient light, the enhanced multimedia may be compensated to perform secondary enhancement on the content of the enhanced multimedia, so that the display of the multimedia can reach a better state under different conditions and meet the display needs of users.

As shown in Fig. 1B, in step S12, performing compensation processing on the enhanced multimedia to obtain a compensated multimedia.

For example, the resolution corresponding to the compensated multimedia is higher than the resolution corresponding to the input multimedia. For example, the resolution corresponding to the compensated multimedia can be ultra-high definition resolution such as 4K and 8K. The frame rate of the compensated multimedia can be 50~60fps, the color depth of the compensated multimedia can be 10~12 bits, and the color gamut of the compensated multimedia can be BT.2020

In the multimedia processing method provided by the embodiments of the present disclosure, the input multimedia is enhanced twice by performing image quality enhancement processing and compensation processing on the input multimedia, so that the generated compensated multimedia can be normally displayed under different ambient light and display screen conditions, can adapt to more application scenarios, and have excellent display effects in different application scenarios. Moreover, by integrating artificial intelligence (AI) technology and designing application mode, the multimedia processing process becomes more automatic and intelligent.

In the multimedia processing method provided by the present disclosure, the image quality enhancement processing is first performed, and after the image quality enhancement processing is performed, the compensation processing is performed.

For example, in some embodiments, the color depth corresponding to the compensated multimedia is higher than the color depth corresponding to the input multimedia, and/or the color gamut corresponding to the compensated multimedia is higher than the color gamut corresponding to the input multimedia.

For example, the compensation processing includes at least one of the following: brightness adjustment, contrast adjustment, saturation adjustment, etc. That is to say, in the compensation processing, the brightness, contrast, saturation, etc., of the enhanced multimedia can be compensated and adjusted to obtain the compensated multimedia.

For example, in some examples, the compensation processing includes brightness adjustment, contrast adjustment, and saturation adjustment, and the brightness adjustment and the contrast adjustment can be composed of mapping curves with different parameters, such as exponential function (exp) curve, logarithmic function (log) curve, sigmoid (S-shaped function) curve, polynomial curve, and so on. The saturation adjustment indicates performing parameter adjustment and calculation by the HSV (Hue, saturation, Value) color space.

For example, each compensation curve corresponds to a panel parameter and an environmental parameter, and is composed of a combination of brightness, contrast, and saturation algorithms. The compensation parameter may correspond to the compensation curve.

For example, in some embodiments, the step S12 may include: selecting a compensation parameter corresponding to the first display panel from a plurality of compensation parameters; and performing compensation processing on the enhanced multimedia based on the compensation parameter corresponding to the first display panel to obtain the compensated multimedia.

For example, in some embodiments, in step S12, selecting the compensation parameter corresponding to the first display panel from the plurality of compensation parameters may include: acquiring a compensation input parameter corresponding to the first display panel, where the compensation input parameter includes a panel parameter corresponding to the first display panel and/or an environmental parameter of an environment where the first display panel is located; and based on the compensation input parameter, selecting a compensation parameter corresponding to the compensation input parameter from the plurality of compensation parameters as the compensation parameter corresponding to the first display panel.

For example, the panel parameter includes a type of the first display panel, a size of the first display panel, a display mode of the first display panel, and the like.

For example, the type of the first display panel includes a light emitting display (LED) panel, a liquid crystal display (LCD) panel, and the like, and the light emitting display panel may include an organic light emitting diode display panel, a quantum dot light emitting diode display panel, and the like. The display mode of the first display panel includes direct display and cast screen display. The size of the first display panel may be 15 inches, 17 inches, 19 inches, 20 inches, 24 inches, 32 inches, etc.

For example, the environmental parameter includes an ambient light parameter, the ambient light parameter is determined based on a brightness value of the ambient light in the environment where the first display panel is located. For another example, the ambient light parameter may also be determined based on the color of the ambient light in the environment where the first display panel is located.

For example, various processes in the compensation processing (for example, the above-mentioned brightness adjustment, contrast adjustment, and saturation adjustment, etc.) can be flexibly configured, and parameters can be set accordingly according to requirements. For example, one or more of brightness adjustment, contrast adjustment, and saturation adjustment may not be performed, and brightness adjustment, contrast adjustment, and saturation adjustment may all be performed.

For example, in some embodiments, in the step S12, acquiring the compensation input parameter corresponding to the first display panel may include: generating a first array, where the first array corresponds to the first display panel, the first array includes a plurality of first array elements, the panel parameter is represented by at least one first array element, and the environmental parameter is represented by at least one first array element; and determining the compensation input parameter corresponding to the first display panel based on the first array.

For example, the compensation input parameter may be defined as an integer array format, that is, the first array is an integer array, and the first array includes a plurality of first array elements, each first array element corresponds to a meaning. According to the value of each first array element, it can be determined whether the corresponding processing needs to be executed. For example, taking brightness adjustment as an example, if the value of the first array element representing the brightness adjustment is the first value, it means that the processing of the brightness adjustment is not executed; if the value of the first array element representing the brightness adjustment is the second value, it means that the processing of the brightness adjustment is executed. For example, in some embodiments, the first value is 0 and the second value is 1, but the present disclosure is not limited thereto.

For example, in some embodiments, a first array element 0 (i.e., a first element in the first array) in the first array represents the panel parameter, and a first array element 1 (i.e., a second element in the first array) in the first array represents the ambient light parameter in the environmental parameter. The definition of each first array element in the first array corresponding to the compensation input parameter is as follows: the first array element 0 indicates the mode (i.e., the panel parameter) of the display panel; when the first array element 0 is 0, it indicates that the display panel is an LED panel; when the first array element 0 is 1, it indicates that the size of the display panel is greater than or equal to the size threshold; when the first array element 0 is 2, it indicates that the display mode of the display panel is cast screen display; when the first array element 0 is 3, it indicates that the display panel is a LCD panel, etc., which is specifically set according to actual situations. The first array element 1 represents the ambient light parameter, when the first array element 1 is 0, it means that the brightness value of the ambient light is less than 1000 lumens; when the first array element 1 is 1, it means that the brightness value of the ambient light is between 1000 lumens and 2000 lumens; when the first array element 1 is 2, it means that the brightness value of the ambient light is between 2000 lumens and 3000 lumens, and so on, which is set according to the actual situations. The number of the first array elements in the first array corresponding to the compensation input parameters, the meaning represented by each first array element, etc., can be set according to the specific situation, and the present disclosure does not impose any restrictions on this.

It should be noted that the values of the first array elements in the first array can be preset with a default value. For example, the default value of the first array element representing the panel parameter can be set in advance according to the characteristics of the display panel itself. In addition, for the ambient light parameter, the default value of the first array element representing the ambient light parameter can be set in advance, or a sensor can also be provided in the display panel to sense the brightness of the ambient light in the environment where the display panel is located, so that the value of the first array element representing the ambient light parameter can be automatically set based on the sensed brightness. The present disclosure is not limited thereto, the user may also turn off the function of the sensor, so as to determine the value of the first array element representing the ambient light parameter according to the user's input.

For example, the size threshold may be set according to actual needs, for example, in some examples, the size threshold may be 24 inches.

For example, in some embodiments, the multimedia processing method may further include: generating a plurality of compensation parameters. For example, the plurality of compensation parameters may be generated in advance in various situations, so that in the actual application, the corresponding compensation parameters may be selected according to the actual situation. The compensation parameters in each case correspond to one display panel and brightness value of one ambient light.

For example, generating the plurality of compensation parameters may include: acquiring a color card image obtained by photographing a standard color card; performing image quality enhancement processing on the color card image to obtain an enhanced color card image; performing compensation processing on the enhanced color card image based on an initial compensation parameter to obtain a compensated color card image; displaying the compensated color card image on a second display panel, and determining whether a display of the compensated color card image meets a preset requirement; in response to the display of the compensated color card image not meeting the preset requirement, adjusting the initial compensation parameter to obtain an adjusted compensation parameter, and performing compensation processing on the enhanced color card image again based on the adjusted compensation parameter until the display of the compensated color card image meets the preset requirement, and taking a compensation parameter corresponding to the compensated color card image meeting the preset requirement as one of the plurality of compensation parameters; determining a compensation input parameter corresponding to the second display panel, where the compensation input parameter corresponding to the second display panel includes a panel parameter corresponding to the second display panel and/or an environmental parameter of an environment where the second display panel is located; and establishing a mapping relationship between the compensation parameter corresponding to the compensated color card image meeting the preset requirement and the compensation input parameter corresponding to the second display panel.

For example, the standard color card may be a 24-color card. For example, the preset requirement may indicate that a plurality of observers observe whether the compensated color card image is displayed normally. For example, the number of the plurality of observers may be from 4 to 6, and the number of men among the plurality of observers is half the number of the plurality of observers and the number of women among the plurality of observers is half the number of the plurality of observers. For example, an observer observed that the compensated color card image is displayed normally, which indicates that the number of color cards in the compensated color card image that the observer can distinguish is more than 18. The present disclosure is not limited to this. For example, the number of the plurality of observers may be more or less, and an observer observed that the compensated color card image is displayed normally, which indicates that the number of color cards in the compensated color card image that the observer can distinguish may also be greater than 16, 17, 19, 20, etc.

For example, after generating the plurality of compensation parameters, the compensation parameters can be in one-to-one correspondence with the corresponding panel parameters and/or environmental parameters, thus facilitating the selection of required compensation parameters based on the panel parameters and/or environmental parameters during the subsequent use process.

For example, the first display panel and the second display panel may be the same display panel or different display panels.

For example, when generating the plurality of compensation parameters, a plurality of different display panels (e.g., having different types, different sizes, different display modes, etc.) can be used to display the compensated color card image under the same ambient light, so as to obtain compensation parameters respectively corresponding to the different display panels (these compensation parameters correspond to the same ambient light). It is also possible to use the same display panel to display the compensated color card image under different ambient lights, so as to obtain compensation parameters respectively corresponding to different ambient lights (these compensation parameters correspond to the same display panel). It should be noted that the panel parameters of the display panel and the environmental parameters can also be changed at the same time.

For example, in some embodiments, a pixel format of the compensated multimedia is an RGB format. The multimedia processing method also includes: performing format conversion on the compensated multimedia to obtain an output multimedia; and encoding the output multimedia to obtain an output multimedia file.

For example, a pixel format of the output multimedia is a YUV format.

For example, the resolution of the output multimedia can be the same as that of the compensated multimedia, the color depth of the output multimedia can be the same as that of the compensated multimedia, and the color gamut of the output multimedia can be the same as that of the compensated multimedia.

For example, the output multimedia can be directly used for display on the first display panel. In order to facilitate transmission and storage, the output multimedia can be coded to generate an output multimedia file, the output multimedia file can be stored in a memory or can be transmitted between different display devices.

For example, in one embodiment, the output multimedia includes an output video, as shown in Fig. 2, in one example, after the enhanced video is obtained, the compensation processing is performed on the enhanced video to obtain the compensated video. Then, the format conversion is performed on the compensated video to obtain an output video; finally, the output video is coded to obtain an output video file. In this case, the pixel format of the output video may be a YUV format.

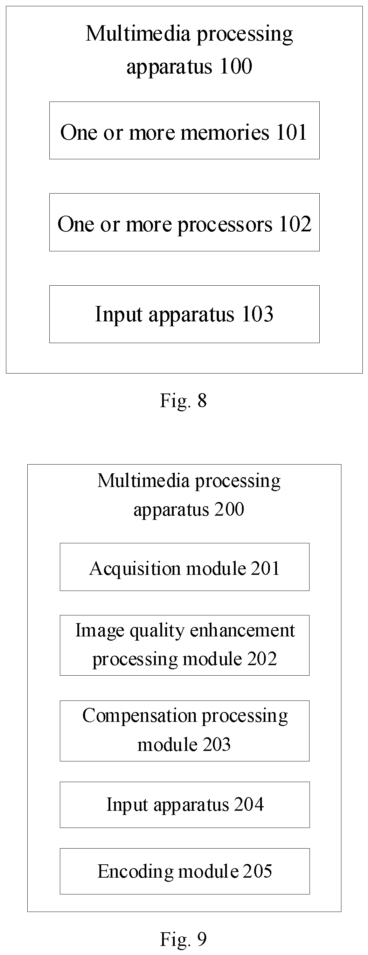

Fig. 8 is a schematic diagram of a multimedia processing apparatus provided by some embodiments of the present disclosure. The multimedia processing apparatus may be used to implement the multimedia processing method provided by any embodiment of the present disclosure.

For example, as shown in Fig. 8, the multimedia processing apparatus 100 includes one or more memories 101 and one or more processors 102. The memory 101 is configured to store computer-executable instructions non-transitorily; the processor 102 is configured to run the computer-executable instructions. The computer-executable instructions, when executed by a processor, implement the multimedia processing method according to any embodiment of the present disclosure. For the specific implementation of each step of the multimedia processing method and related explanations, reference may be made to the embodiments of the abovementioned multimedia processing method, which will not be repeated herein.

For example, as shown in Fig. 8, the multimedia processing apparatus 100 further includes an input apparatus 103. In response to the multimedia processing method including acquiring a compensation input parameter corresponding to the first display panel and/or acquiring an image quality enhancement parameter, the compensation input parameter and/or the image quality enhancement parameter are/is input through the input apparatus 103. For example, the compensation input parameter and/or the image quality enhancement parameter can be input through physical buttons, virtual buttons (e.g., icons on a touch panel/display panel), voice, etc.

For example, the input apparatus 103 may include a touch screen, a touch pad, a keyboard, a mouse, a microphone, an electronic pen, and the like.

For example, in some embodiments, the multimedia processing apparatus 100 further includes a display apparatus, the display apparatus includes a display panel (i.e., the first display panel in the multimedia processing method), and the display panel is used for displaying the output multimedia.

For example, the multimedia processing apparatus 100 may further include a communication interface and a communication bus. The memory 101, the processor 102, the input apparatus 103, and the communication interface communicate with each other through the communication bus. The components such as the memory 101, the processor 102, the input apparatus 103, and the communication interface can also communicate with each other through network connection. The present disclosure does not limit the types and functions of networks herein. For example, when the multimedia processing apparatus 100 includes a plurality of processors 102, the plurality of processors 102 may also communicate with each other through a communication bus or a network.

For example, other implementations of the multimedia processing method implemented by the processor 102 executing the computer-executable instructions stored in the memory 101 are the same as those mentioned in the above embodiments of the multimedia processing method, and will not be repeated here.

For example, the communication bus may be a peripheral component interconnect (PCI) standard bus or an extended industry standard architecture (EISA) bus or the like. The communication bus may be divided into an address bus, a data bus, a control bus, or the like.

For example, the communication interface is used to implement communication between the multimedia processing apparatus 100 and other devices.

For example, the processor 102 and the memory 101 can be arranged on a server side (or in a cloud) or on a client side (for example, a mobile device such as a mobile phone).

For example, the processor 102 can control other components in the multimedia processing apparatus 100 to perform desired functions. The processor 102 may be a central processing unit (CPU), a network processor (NP), etc., and can also be a digital signal processor (DSP), an application-specific integrated circuit (ASIC), a field-programmable gate array (FPGA) or other programmable logic devices, discrete gate or transistor logic devices, and discrete hardware components. The central processing unit (CPU) can be X86 or ARM architecture, etc. GPU (Graphics Processing Unit) can be directly integrated into the motherboard separately or built into the northbridge chip of the motherboard. GPU can also be built into the central processing unit (CPU).

For example, the memory 101 may include any combination of one or more computer program products, which may include various forms of computer-readable storage media, such as a volatile memory and/or a nonvolatile memory. The volatile memory may include, for example, a random-access memory (RAM) and/or a cache, etc. The nonvolatile memory may include, for example, a read-only memory (ROM), a hard disk, an erasable programmable read-only memory (EPROM), a portable compact disk read-only memory (CD-ROM), a USB memory, a flash memory, etc. One or more computer-executable instructions can be stored on the computer-readable storage medium, and the processor 102 can execute the computer-executable instructions to implement various functions of the multimedia processing apparatus 100. The memory 101 can also store various application programs, various data, and the like.

It should be noted that the multimedia processing apparatus 100 can achieve technical effects similar to those of the above-mentioned multimedia processing method, and the repetition will not be described here.

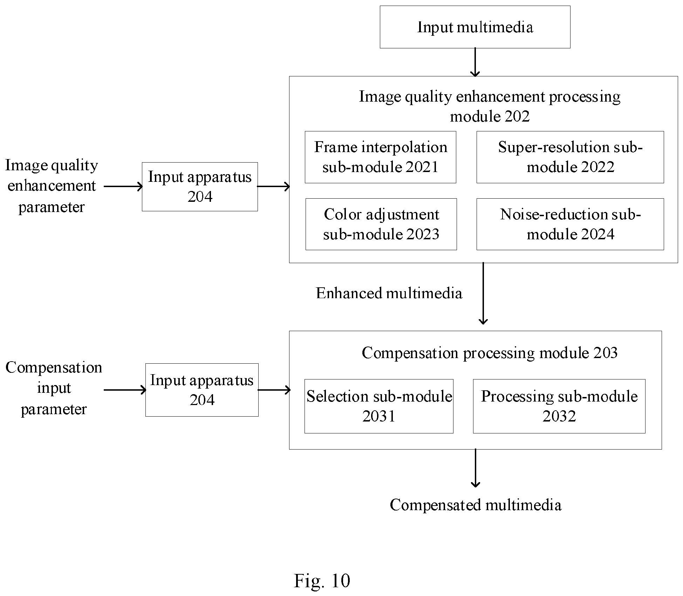

Fig. 9 is a schematic diagram of another multimedia processing apparatus provided by at least one embodiment of the present disclosure, and Fig. 10 is a schematic diagram of another multimedia processing apparatus provided by at least one embodiment of the present disclosure. The multimedia processing apparatus shown in Fig. 9 can be used to implement the multimedia processing method provided by any embodiment of the present disclosure.

For example, as shown in Fig. 9, the multimedia processing apparatus 200 may include an acquisition module 201 and an image quality enhancement processing module 202.

For example, the acquisition module 201 is used to acquire an input multimedia. The acquisition module 201 is used to implement the step S10 shown in Fig. 1A and FIG. 1B. For a detailed description of the functions implemented by the acquisition module 201, reference may be made to the related description of the step S10 shown in Fig. 1A and Fig. 1B in the embodiments of the above-mentioned multimedia processing method, and the repetition will not be repeated here.

For example, the image quality enhancement processing module 202 is used for performing image quality enhancement processing on the input multimedia to obtain an enhanced multimedia. For example, a resolution corresponding to the enhanced multimedia is higher than a resolution corresponding to the input multimedia. The image quality enhancement processing module 202 is used to implement the step S11 shown in Fig. 1A and Fig. 1B. For a detailed description of the functions implemented by the image quality enhancement processing module 202, reference may be made to the related description of the step S11 shown in Fig. 1A and Fig. 1B in the embodiments of the above-mentioned multimedia processing method, and the repetition will not be repeated here.

For example, the image quality enhancement processing includes at least one of the following processing: frame interpolation processing, super-resolution processing, noise-reduction processing, color adjustment processing, HDR up-conversion processing, detail restoration processing, and the like. As shown in Fig. 10, the image quality enhancement processing module 202 includes at least one of the following sub-modules: a frame interpolation sub-module 2021, a super-resolution sub-module 2022, a color adjustment sub-module 2023, a noise-reduction sub-module 2024, an HDR up-conversion sub-module, a detail restoration sub-module, and the like. The frame interpolation sub-module 2021 is used to implement the frame interpolation processing, the super-resolution sub-module 2022 is used to implement the super-resolution processing, the color adjustment sub-module 2023 is used to implement the color adjustment processing, the noise-reduction sub-module 2024 is used to implement the noise-reduction processing, the HDR up-conversion sub-module is used to implement the HDR up-conversion processing, and the detail restoration sub-module is used to implement the detail restoration processing.

For example, the frame interpolation sub-module 2021 includes a first deep learning model, and is used to perform frame interpolation processing on an input of the frame interpolation sub-module 2021 based on the first deep learning model. The input of the frame interpolation sub-module 2021 includes a video, and the frame interpolation processing includes adding at least one transition image frame between every two image frames of the video.

For example, the super-resolution sub-module 2022 includes a second deep learning model, and is used to perform super-resolution processing on an input of the super-resolution sub-module 2022 based on the second deep learning model, so as to improve the spatial resolution of the input of the super-resolution sub-module 2022.

For example, the color adjustment sub-module 2023 includes a third deep learning model, and is used for performing the color adjustment processing on an input of the color adjustment sub-module 2023 based on the third deep learning model.

For example, the noise-reduction sub-module 2024 includes a fourth deep learning model and is used to perform noise-reduction processing on an input of the noise-reduction sub-module 2024 based on the fourth deep learning model.

It should be noted that for the specific descriptions of the functions achieved by the frame interpolation sub-module 2021, the super-resolution sub-module 2022, the color adjustment sub-module 2023, and the noise-reduction sub-module 2024, reference may be made to the related descriptions of the frame interpolation processing, the super-resolution processing, the noise-reduction processing, and the color adjustment processing in the embodiments of the above-mentioned multimedia processing method, and the repetition is not repeated here.

For example, as shown in Fig. 9, the multimedia processing apparatus 200 may further include a compensation processing module 203. For example, the compensation processing module 203 is used for performing compensation processing on the enhanced multimedia to obtain a compensated multimedia. The resolution corresponding to the compensated multimedia is higher than the resolution corresponding to the input multimedia. The compensation processing module 203 is used to implement the step S12 shown in Fig. 1B. For a specific description of the functions implemented by the compensation processing module 203, reference may be made to the related description of step S12 shown in Fig. 1B in the embodiment of the above multimedia processing method, and the repetition will not be repeated here.

For example, in some embodiments, the pixel format of the compensated multimedia is RGB format,

As shown in Fig. 9, the multimedia processing apparatus further comprises an encoding module 205, and the encoding module 205 is used for performing format conversion on the compensated multimedia to obtain an output multimedia and encoding the output multimedia to obtain an output multimedia file.

For example, the pixel format of the output multimedia is YUV format.

For example, in some embodiments, the multimedia processing apparatus 200 further includes a display apparatus, and the display apparatus includes a first display panel for displaying the output multimedia.

For example, in some embodiments, as shown in Fig. 10, the compensation processing module 203 includes a selection sub-module 2031 and a processing sub-module 2032. The selection sub-module 2031 is used for selecting a compensation parameter corresponding to the first display panel from a plurality of compensation parameters; the processing sub-module 2032 is used for performing compensation processing on the enhanced multimedia based on the compensation parameter corresponding to the first display panel to obtain a compensated multimedia.

For example, in some embodiments, the selection sub-module 2031 includes an acquisition unit and a selection unit. For example, the acquisition unit is configured to acquire a compensation input parameter corresponding to the first display panel, and the compensation input parameter includes a panel parameter corresponding to the first display panel and/or an environmental parameter of the environment where the first display panel is located. For example, the selection unit is configured to select a compensation parameter corresponding to the compensation input parameter from a plurality of compensation parameters as the compensation parameter corresponding to the first display panel based on the compensation input parameter.

For example, as shown in Fig. 9 and Fig. 10, the multimedia processing apparatus 200 further includes an input apparatus 204. As shown in Fig. 10, the image quality enhancement parameter is input to the image quality enhancement processing module 202 through the input apparatus 204, and the compensation input parameter is input to the compensation processing module 203 through the input apparatus 204.

For example, the acquisition unit may be connected with the input apparatus 204 to receive the compensation input parameter input from the input apparatus 204.

For example, data communication can be performed among the acquisition module 201, the image quality enhancement processing module 202, the compensation processing module 203, the input apparatus 204, and the encoding module 205.

For example, the acquisition module 201, the image quality enhancement processing module 202, the compensation processing module 203, and/or the encoding module 205 include codes and programs stored in a memory; the processor can execute the codes and programs to implement some or all functions of the acquisition module 201, the image quality enhancement processing module 202, the compensation processing module 203, and/or the encoding module 205 as described above. For example, the acquisition module 201, the image quality enhancement processing module 202, the compensation processing module 203, and/or the encoding module 205 may be dedicated hardware devices for implementing some or all functions of the acquisition module 201, the image quality enhancement processing module 202, the compensation processing module 203, and/or the encoding module 205 as described above. For example, the acquisition module 201, the image quality enhancement processing module 202, the compensation processing module 203, and/or the encoding module 205 may be a circuit board or a combination of a plurality of circuit boards for implementing the functions described above. In the embodiments of the present disclosure, the circuit board or the combination of the plurality of circuit boards may include: (1) one or more processors; (2) one or more non-transitory memories connected with the processor; and (3) firmware stored in the memory and executable by the processor.

For example, the input apparatus 204 may include a touch screen, a touch pad, a keyboard, a mouse, a microphone, an electronic pen, and the like.

It should be noted that the multimedia processing apparatus can achieve technical effects similar to those of the above-mentioned multimedia processing method, and the details are not repeated here.

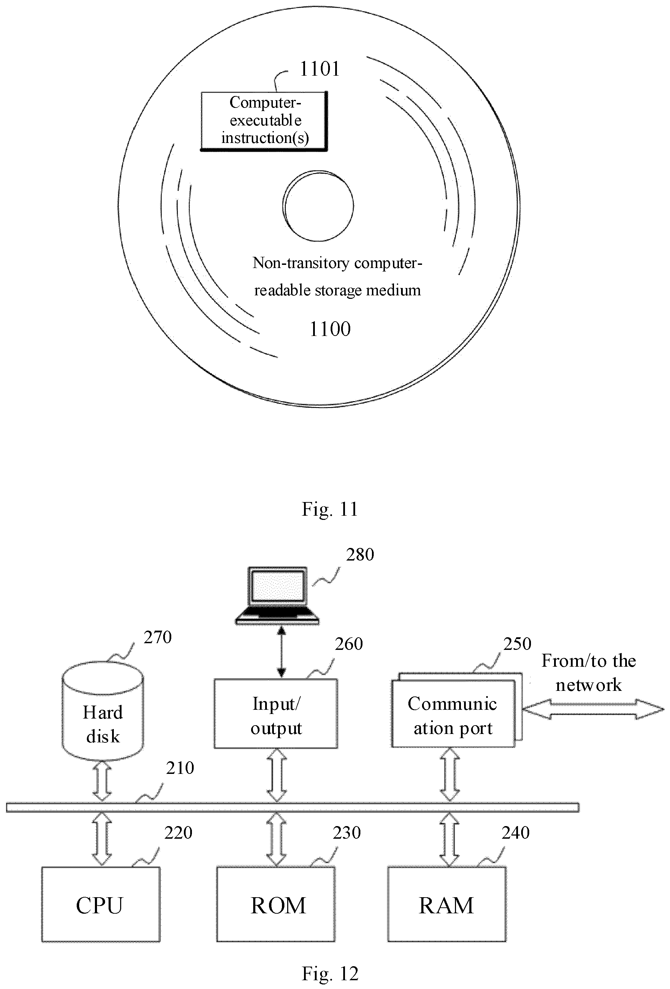

Fig. 11 is a schematic diagram of a non-transitory computer-readable storage medium provided by at least one embodiment of the present disclosure. For example, as shown in Fig. 11, one or more computer-executable instructions 1101 may be stored on a non-transitory computer-readable storage medium 1100. For example, when the computer-executable instructions 1101 are executed by a processor (or computer), one or more steps of the multimedia processing method according to any embodiment of the present disclosure may be performed.

For example, the non-transitory computer-readable storage medium 1100 can be applied to the above-mentioned multimedia processing apparatus 100, for example, the non-transitory computer-readable storage medium 1100 can include the memory 101 in the multimedia processing apparatus 100.

For example, for the description of the non-transitory computer-readable storage medium 1100, reference may be made to the description of the memory 101 in the embodiments of the multimedia processing apparatus 100, and the repetition is not repeated here.

Fig. 12 is a schematic diagram of a hardware environment provided by at least one embodiment of the present disclosure. The electronic device provided by the present disclosure can be applied to the Internet system.

The functions of the multimedia processing apparatus involved in the present disclosure can be implemented using the computer system provided in Fig. 12. Such computer system can include a personal computer, a notebook computer, a tablet computer, a mobile phone, a personal digital assistant, smart glasses, a smart watch, a smart ring, a smart helmet, and any smart portable or wearable devices. The specific system in this embodiment uses a functional block diagram to explain a hardware platform including a user interface. Such a computer device can be a general-purpose computer device or a special purpose computer device. Both kinds of computer devices can be used to implement the multimedia processing apparatus in the embodiments of the present disclosure. A computer system may include any component that implements the information needed to implement multimedia processing as currently described. For example, the computer system can be implemented by a computer device through its hardware devices, software programs, firmware, and their combinations. For convenience, only one computer device is shown in Fig. 12, but the computer functions related to information needed for implementing multimedia processing described in the embodiments can be implemented by a group of similar platforms in a distributed manner, which disperses the processing load of the computer system.

As shown in Fig. 12, the computer system may include a communication port 250, which is connected with a network ("from/to the network" in Fig. 12) that is used to achieve data communication. For example, the computer system may send and receive information and data through the communication port 250, that is, the communication port 250 may implement wireless or wired communication between the computer system and other electronic devices to exchange data. The computer system may also include a processor group 220 (i.e., the processors described above) for executing program instructions. The processor group 220 may be composed of at least one processor (e.g., CPU). The computer system may include an internal communication bus 210. The computer system may include different forms of program storage units and data storage units (i.e., the memory or storage medium described above), such as a hard disk 270, a read-only memory (ROM) 230, and a random-access memory (RAM) 240, which can be used to store various data files used for computer processing and/or communication, as well as possible program instructions executed by the processor group 220. The computer system may also include an input/output 260, and the input/output 260 is used for implementing input/output data flow between the computer system and other components (e.g., the user interface 280, etc.).

Generally, the following devices can be connected to the input/output 260: an input device including, for example, a touch screen, a touch pad, a keyboard, a mouse, a camera, a microphone, an accelerometer, a gyroscope, etc.; an output device including, for example, a liquid crystal display (LCD), a speaker, a vibrator, and the like; a storage device including, for example, a magnetic tape, a hard disk, and the like; and a communication interface.

Although Fig. 12 shows a computer system with various devices, it should be understood that the computer system is not required to have all the devices shown, and instead, the computer system may have more or less devices.

For the present disclosure, the following statements should be noted:

(1) the accompanying drawings of the embodiment(s) of the present disclosure involve only the structure(s) in connection with the embodiment(s) of the present disclosure, and other structure(s) can be referred to common design(s);

(2) for the purpose of clarity, in the accompanying drawings for illustrating the embodiment(s) of the present disclosure, the thickness and size of a layer or a structure may be enlarged. However, it should be understood that, in the case in which a component or element such as a layer, film, region, substrate, or the like is referred to as being "on" or "under" another component or element, it may be "directly" "on" or "under" the another component or element or a component or element may be interposed therebetween; and

(3) in case of no conflict, the embodiments of the present disclosure and the features in the embodiment(s) can be combined with each other to obtain new embodiment(s).

What have been described above are only specific implementations of the present disclosure, the protection scope of the present disclosure is not limited thereto, and the protection scope of the present disclosure should be based on the protection scope of the claims.

**Claims**

1. A multimedia processing method, comprising:

   acquiring an input multimedia, and
   performing image quality enhancement processing on the input multimedia to obtain an enhanced multimedia;
   wherein a resolution corresponding to the enhanced multimedia is higher than a resolution corresponding to the input multimedia.

2. The multimedia processing method according to claim 1, further comprising:

   performing compensation processing on the enhanced multimedia to obtain a compensated multimedia,
   wherein a resolution corresponding to the compensated multimedia is higher than the resolution corresponding to the input multimedia.

3. The multimedia processing method according to claim 2, wherein the multimedia processing method is applied to a first display panel,
   the performing compensation processing on the enhanced multimedia to obtain a compensated multimedia, comprises:

   selecting a compensation parameter corresponding to the first display panel from a plurality of compensation parameters, and
   performing compensation processing on the enhanced multimedia based on the compensation parameter corresponding to the first display panel to obtain the compensated multimedia.

4. The multimedia processing method according to claim 3, wherein the selecting a compensation parameter corresponding to the first display panel from a plurality of compensation parameters, comprises:

   acquiring a compensation input parameter corresponding to the first display panel, wherein the compensation input parameter comprises a panel parameter corresponding to the first display panel and/or an environmental parameter of an environment where the first display panel is located, and
   based on the compensation input parameter, selecting a compensation parameter corresponding to the compensation input parameter from the plurality of compensation parameters as the compensation parameter corresponding to the first display panel.

5. The multimedia processing method according to claim 4, wherein the acquiring a compensation input parameter corresponding to the first display panel, comprises:

   generating a first array, wherein the first array corresponds to the first display panel, the first array comprises a plurality of first array elements, the panel parameter is represented by at least one first array element, and the environmental parameter is represented by at least one first array element, and
   determining the compensation input parameter corresponding to the first display panel based on the first array.

6. The multimedia processing method according to claim 4 or 5, wherein the panel parameter comprises a type of the first display panel, a size of the first display panel, and a display mode of the first display panel.

7. The multimedia processing method according to claim 6, wherein the type of the first display panel comprises an organic light-emitting display panel and a liquid crystal display panel, and the display mode of the first display panel comprises direct display and cast screen display.

8. The multimedia processing method according to any one of claims 4-7, wherein the environmental parameter comprises an ambient light parameter, the ambient light parameter is determined based on a brightness value of ambient light of the environment where the first display panel is located.

9. The multimedia processing method according to any one of claims 2-8, wherein the compensation processing comprises at least one of the following: brightness adjustment, contrast adjustment, and saturation adjustment.

10. The multimedia processing method according to any one of claims 3-9, further comprising:

generating the plurality of compensation parameters, wherein the generating the plurality of compensation parameters, comprises:

acquiring a color card image obtained by photographing a standard color card; performing image quality enhancement processing on the color card image to obtain an enhanced color card image; performing compensation processing on the enhanced color card image based on an initial compensation parameter to obtain a compensated color card image; displaying the compensated color card image on a second display panel, and determining whether a display of the compensated color card image meets a preset requirement; in response to the display of the compensated color card image not meeting the preset requirement, adjusting the initial compensation parameter to obtain an adjusted compensation parameter, and performing compensation processing on the enhanced color card image again based on the adjusted compensation parameter until the display of the compensated color card image meets the preset requirement, and taking a compensation parameter corresponding to the compensated color card image meeting the preset requirement as one of the plurality of compensation parameters; determining a compensation input parameter corresponding to the second display panel, wherein the compensation input parameter corresponding to the second display panel comprises a panel parameter corresponding to the second display panel and/or an environmental parameter of an environment where the second display panel is located; and establishing a mapping relationship between the compensation parameter corresponding to the compensated color card image meeting the preset requirement and the compensation input parameter corresponding to the second display panel.

11. The multimedia processing method according to any one of claims 1-10, wherein the image quality enhancement processing comprises at least one of the following processing: frame interpolation processing, super-resolution processing, noise-reduction processing, color adjustment processing, high dynamic range up-conversion processing, and detail restoration processing.

12. The multimedia processing method according to claim 11, wherein performing image quality enhancement processing on the input multimedia to obtain the enhanced multimedia, comprises:

acquiring an image quality enhancement parameter; and performing image quality enhancement processing on the input multimedia according to the image quality enhancement parameter to obtain the enhanced multimedia.

13. The multimedia processing method according to claim 12, wherein the image quality enhancement parameter comprises at least one of following parameters: a frame interpolation algorithm name and/or a frame interpolation parameter corresponding to the frame interpolation processing, a super-resolution algorithm name and/or a resolution parameter corresponding to the super-resolution processing, a color adjustment algorithm name and/or a color adjustment parameter corresponding to the color adjustment processing, a noise-reduction algorithm name and/or a noise-reduction parameter corresponding to the noise-reduction processing, a high dynamic range up-conversion algorithm and/or a high dynamic range up-conversion parameter corresponding to the high dynamic range up-conversion processing, and a detail restoration algorithm name and/or a detail restoration parameter corresponding to the detail restoration processing.

14. The multimedia processing method according to claim 13, wherein the acquiring an image quality enhancement parameter, comprises:

generating a second array, wherein the second array comprises a plurality of second array elements, the frame interpolation parameter corresponding to the frame interpolation processing is represented by at least one second array element, the resolution parameter corresponding to the super-resolution processing is represented by at least one second array element, the color adjustment parameter corresponding to the color adjustment processing is represented by at least one second array element, the noise-reduction parameter corresponding to the noise-reduction processing is represented by at least one second array element, the high dynamic range up-conversion parameter corresponding to the high dynamic range up-conversion processing is represented by at least one second array element, and the detail restoration parameter corresponding to the detail restoration processing is represented by at least one second array element; and
determining the image quality enhancement parameter based on the second array.

15. The multimedia processing method according to claim 13, wherein the acquiring an image quality enhancement parameter, comprises:

acquiring an algorithm string, wherein the algorithm string comprises at least one of following algorithms: a frame interpolation algorithm, a super-resolution algorithm, a color adjustment algorithm, a noise-reduction algorithm, a high dynamic range up-conversion algorithm, and a detail restoration algorithm, the frame interpolation algorithm comprises the frame interpolation algorithm name and the frame interpolation parameter, the super-resolution algorithm comprises the super-resolution algorithm name and the super-resolution parameter, the color adjustment algorithm comprises the color adjustment algorithm name and the color adjustment parameter, the noise-reduction algorithm comprises the noise-reduction algorithm name and the noise-reduction parameter, the high dynamic range up-conversion algorithm comprises the high dynamic range up-conversion algorithm name and the high dynamic range up-conversion parameter, and the detail restoration algorithm comprises the detail restoration algorithm name and the detail restoration parameter;
determining the image quality enhancement parameter based on the algorithm string.

16. The multimedia processing method according to any one of claims 11-15, wherein a multimedia on which the frame interpolation processing is used to be performed comprises a video,

the frame interpolation processing is implemented based on a first deep learning model, and the first deep learning model is configured to add at least one transition image frame between every two image frames in the video,
the super-resolution processing is implemented based on a second deep learning model, and the second deep learning model is configured to perform super-resolution processing on a multimedia on which the super-resolution processing is used to be performed to improve a spatial resolution of the multimedia on which the super-resolution processing is used to be performed,
the color adjustment processing is implemented based on a third deep learning model; and
the noise-reduction processing is implemented based on a fourth deep learning model, and the fourth deep learning model is configured to perform noise-reduction processing on a multimedia on which the noise-reduction processing is used to be performed.

17. The multimedia processing method according to claim 16, wherein the third deep learning model comprises a regression sub-model and a plurality of lookup table sub-model groups, and each lookup table sub-model group comprises at least one lookup table sub-model;
the color adjustment processing comprises:

preprocessing the multimedia on which the color adjustment processing is used to be performed to obtain normalized data, wherein the preprocessing comprises normalization processing;
processing the normalized data by using the regression sub-model to obtain at least one weight parameter;
acquiring a color adjustment parameter;
selecting a lookup table sub-model group corresponding to the color adjustment parameter from the plurality of lookup table sub-model groups according to the color adjustment parameter;
determining a target lookup table sub-model based on the at least one weight parameter and the lookup table sub-model group; and
processing the normalized data by using the target lookup table sub-model to generate an output of the color adjustment processing.

18. The multimedia processing method according to claim 16 or 17, wherein the first deep learning model comprises a real-time intermediate flow estimation algorithm model.

19. The multimedia processing method according to any one of claims 16-18, wherein the second deep learning model comprises a residual feature distillation network model.

20. The multimedia processing method according to any one of claims 16-19, wherein the fourth deep learning model comprises an Unet network model.

21. The multimedia processing method according to any one of claims 11-20, wherein the input multimedia comprises a video, and the enhanced multimedia comprises an enhanced video corresponding to the video,
performing image quality enhancement processing on the input multimedia to obtain the enhanced multimedia, comprises:

   performing frame interpolation processing on the video to obtain a video after frame interpolation;
   performing color adjustment processing on the video after frame interpolation to obtain a color-adjusted video;
   performing noise-reduction processing on the color-adjusted video to obtain a noise-reduced video;
   performing super-resolution processing on the noise-reduced video to obtain the enhanced video,
   wherein a resolution of the enhanced video is higher than a resolution of the noise-reduced video.

22. The multimedia processing method according to claim 21, wherein a color depth of the color-adjusted video is higher than a color depth corresponding to the video after frame interpolation, and/or a color gamut corresponding to the color-adjusted video is higher than a color gamut corresponding to the video after frame interpolation.

23. The multimedia processing method according to any one of claims 1-22, wherein the acquiring an input multimedia, comprises:

   acquiring an original multimedia file;
   decoding the original multimedia file to obtain an original multimedia; and
   performing format conversion processing on the original multimedia to obtain the input multimedia,
wherein a pixel format of the input multimedia comprises an RGB format.

24. The multimedia processing method according to any one of claims 2-23, wherein a pixel format of the compensated multimedia is an RGB format,
the multimedia processing method further comprises:

   performing format conversion on the compensated multimedia to obtain an output multimedia, wherein a pixel format of the output multimedia is a YUV format;
   encoding the output multimedia to obtain an output multimedia file.

25. The multimedia processing method according to any one of claims 2-24, wherein a color depth corresponding to the compensated multimedia is higher than a color depth corresponding to the input multimedia, and/or a color gamut corresponding to the compensated multimedia is higher than a color gamut corresponding to the input multimedia.

26. A multimedia processing apparatus, comprising:

   one or more memories, storing computer-executable instructions non-transitorily;
   one or more processors, configured to run the computer-executable instructions,
   wherein the computer-executable instructions, when executed by the one or more processors, implement the multimedia processing method according to any one of claims 1 to 25.

27. The multimedia processing apparatus according to claim 26, further comprising an input apparatus,

   wherein in response to the multimedia processing method comprising acquiring a compensation input parameter corresponding to a first display panel and/or acquiring an image quality enhancement parameter,
   the compensation input parameter and/or the image quality enhancement parameter are/is input through the input apparatus.

28. The multimedia processing apparatus according to claim 27, wherein the input apparatus comprises a touch screen, a touch panel, a keyboard, a mouse, or a microphone.

29. A non-transitory computer-readable storage medium, wherein the non-transitory computer-readable storage medium stores computer-executable instructions, when the computer-executable instructions are executed by a processor, the multimedia processing method according to any one of claims 1-25 is implemented.

| | |
|---|---|
| S10 | Acquiring an input multimedia |
| S11 | Performing image quality enhancement processing on the input multimedia to obtain an enhanced multimedia |

Fig. 1A

| | |
|---|---|
| S10 | Acquiring an input multimedia |
| S11 | Performing image quality enhancement processing on the input multimedia to obtain an enhanced multimedia |
| S12 | Performing compensation processing on the enhanced multimedia to obtain a compensated multimedia |

Fig. 1B

Fig. 2

Fig. 3

Fig. 4

Fig. 5

Fig. 6

Fig. 7

Multimedia processing
apparatus 100

One or more memories 101

One or more processors 102

Input apparatus 103

Fig. 8

Multimedia processing
apparatus 200

Acquisition module 201

Image quality enhancement
processing module 202

Compensation processing
module 203

Input apparatus 204

Encoding module 205

Fig. 9

Input multimedia

Image quality enhancement processing module 202

| Frame interpolation sub-module 2021 | Super-resolution sub-module 2022 |
|---|---|
| Color adjustment sub-module 2023 | Noise-reduction sub-module 2024 |

Image quality enhancement parameter → Input apparatus 204 →

Enhanced multimedia

Compensation processing module 203

| Selection sub-module 2031 | Processing sub-module 2032 |
|---|---|

Compensation input parameter → Input apparatus 204 →

Compensated multimedia

Fig. 10

1101

Computer-
executable
instruction(s)

Non-transitory computer-
readable storage medium

1100

Fig. 11

280

270

260

250

From/to the
network

Hard
disk

Input/
output

Communic
ation port

210

220

230

240

CPU

ROM

RAM

Fig. 12

## INTERNATIONAL SEARCH REPORT

| International application No. |
| --- |
| **PCT/CN2023/083986** |

| A. | CLASSIFICATION OF SUBJECT MATTER |
| --- | --- |

G06T5/00(2006.01)i

According to International Patent Classification (IPC) or to both national classification and IPC

| B. | FIELDS SEARCHED |
| --- | --- |

Minimum documentation searched (classification system followed by classification symbols)

IPC:G06T, H04N

Documentation searched other than minimum documentation to the extent that such documents are included in the fields searched

Electronic data base consulted during the international search (name of data base and, where practicable, search terms used)

CNABS, CNTXT, WPABS, WPABSC, VEN, VCN, CNKI, IEEE: 图片, 图像, 视频帧, 影像, 画质优化, 画质增强, 图像增强, 细节修复, 超分辨率, 插帧, 降噪, 高动态范围, 大于, 高于, 提高, 分辨率, 清晰度, 补偿, 调整, 对比度, 亮度, 色度, picture, image, frame, quality optimiz+, enhancement, detail restoration, super-resolution, SR, frame insert+, denois+, hdr, greater than, improv+, increas+, resolution, compensat+, adjust+, contrast, luminance, chroma

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 112529775 A (HUAWEI TECHNOLOGIES CO., LTD.) 19 March 2021 (2021-03-19) description, paragraphs 130-250 | 1, 2, 11-29 |
| Y | CN 112529775 A (HUAWEI TECHNOLOGIES CO., LTD.) 19 March 2021 (2021-03-19) description, paragraphs 130-250 | 3-10 |
| Y | CN 113986177 A (GUANGDONG OPPO MOBILE COMMUNICATIONS CO., LTD.) 28 January 2022 (2022-01-28) description, paragraphs 32-62 | 3-10 |
| X | CN 108391060 A (HUAWEI TECHNOLOGIES CO., LTD.) 10 August 2018 (2018-08-10) description, paragraphs 146-215 | 1, 2, 11-29 |
| Y | CN 108391060 A (HUAWEI TECHNOLOGIES CO., LTD.) 10 August 2018 (2018-08-10) description, paragraphs 146-215 | 3-10 |
| X | CN 111476719 A (GUANGDONG OPPO MOBILE COMMUNICATIONS CO., LTD.) 31 July 2020 (2020-07-31) description, paragraphs 47-151 | 1, 11-29 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 July 2023** | **04 July 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/083986** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 111476719 A (GUANGDONG OPPO MOBILE COMMUNICATIONS CO., LTD.) 31 July 2020 (2020-07-31)<br>    description, paragraphs 47-151 | 2-10 |
| X | CN 112184548 A (SHENZHEN INSTITUTES OF ADVANCED TECHNOLOGY, CHINESE ACADEMY OF SCIENCES) 05 January 2021 (2021-01-05)<br>    description, paragraphs 115-277 | 1, 11-29 |
| A | CN 112184548 A (SHENZHEN INSTITUTES OF ADVANCED TECHNOLOGY, CHINESE ACADEMY OF SCIENCES) 05 January 2021 (2021-01-05)<br>    description, paragraphs 115-277 | 2-10 |
| X | JP 2007329678 A (MATSUSHITA ELECTRIC INDUSTRIAL CO., LTD.) 20 December 2007 (2007-12-20)<br>    description, paragraphs 8-38 | 1, 11-29 |
| A | JP 2007329678 A (MATSUSHITA ELECTRIC INDUSTRIAL CO., LTD.) 20 December 2007 (2007-12-20)<br>    description, paragraphs 8-38 | 2-10 |
| A | CN 109889800 A (SHENZHEN SENSETIME TECHNOLOGY CO., LTD.) 14 June 2019 (2019-06-14)<br>    entire document | 1-29 |
| A | WO 2021164731 A1 (HUAWEI TECHNOLOGIES CO., LTD.) 26 August 2021 (2021-08-26)<br>    entire document | 1-29 |

Form PCT/ISA/210 (second sheet) (July 2022)

**INTERNATIONAL SEARCH REPORT**
**Information on patent family members**

International application No.

**PCT/CN2023/083986**

| Patent document cited in search report | | | Publication date (day/month/year) | Patent family member(s) | | | Publication date (day/month/year) |
|---|---|---|---|---|---|---|---|
| CN | 112529775 | A | 19 March 2021 | None | | | |
| CN | 113986177 | A | 28 January 2022 | None | | | |
| CN | 108391060 | A | 10 August 2018 | None | | | |
| CN | 111476719 | A | 31 July 2020 | None | | | |
| CN | 112184548 | A | 05 January 2021 | None | | | |
| JP | 2007329678 | A | 20 December 2007 | None | | | |
| CN | 109889800 | A | 14 June 2019 | None | | | |
| WO | 2021164731 | A1 | 26 August 2021 | EP | 4105877 | A1 | 21 December 2022 |

Form PCT/ISA/210 (patent family annex) (July 2022)

**EP 4 502 920 A1**

**Patent documents cited in the description**

- CN 202210343186